(19) Europäisches Patentamt
European Patent Office
Office européen des brevets

(11) **EP 4 496 254 A1**

(12) **EUROPEAN PATENT APPLICATION**
published in accordance with Art. 153(4) EPC

(43) Date of publication:
**22.01.2025 Bulletin 2025/04**

(21) Application number: **23790959.3**

(22) Date of filing: **17.03.2023**

(51) International Patent Classification (IPC):
**H04L 5/00** $^{(2006.01)}$

(52) Cooperative Patent Classification (CPC):
**H04L 5/00; H04W 28/06**

(86) International application number:
**PCT/CN2023/082322**

(87) International publication number:
**WO 2023/202298 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 CN 202210409826**

(71) Applicant: **Huawei Technologies Co., Ltd.
Shenzhen, Guangdong 518129 (CN)**

(72) Inventors:
• **TANG, Zihan
Shenzhen, Guangdong 518129 (CN)**

• **LI, Jiahui
Shenzhen, Guangdong 518129 (CN)**
• **MA, Mengyao
Shenzhen, Guangdong 518129 (CN)**
• **HE, Jia
Shenzhen, Guangdong 518129 (CN)**
• **LI, Xianjin
Shenzhen, Guangdong 518129 (CN)**
• **XIE, Junwen
Shenzhen, Guangdong 518129 (CN)**
• **DU, Yinggang
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **DATA TRANSMISSION METHOD AND DATA TRANSMISSION APPARATUS**

(57) This application provides a data transmission method and a data transmission apparatus, to improve accuracy of environment construction and reduce a data transmission amount, to reduce an occupied air interface resource. The method includes: A terminal device obtains a first dataset. The first dataset includes sampled data of a beam signal from a sensed object. The terminal device sends a first signal. The first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset.

FIG. 2

## Description

This application claims priority to Chinese Patent Application No. 202210409826.8, filed with the China National Intellectual Property Administration on April 19, 2022 and entitled "DATA TRANSMIS SION METHOD AND DATA TRANSMISSION APPARATUS", which is incorporated herein by reference in its entirety.

## TECHNICAL FIELD

This application relates to the wireless communication field, and in particular, to a data transmission method and a data transmission apparatus.

## BACKGROUND

With increasingly rich application scenarios of wireless communication and rapid development of semiconductor device technologies, a future wireless communication device may have a sensing capability. A terminal device having a sensing capability transmits a beam around the terminal device. A beam sent by the terminal device is reflected by an obstacle. After receiving the reflected beam, the terminal device compresses beam data by using an image-related algorithm, and sends compressed beam data to a network device. The network device receives the compressed beam data, and may construct environment information based on the compressed beam data. For example, the network device may construct a shape of the obstacle, and calculate a distance from the obstacle to the terminal device. However, accuracy of environment information constructed by the network device based on beam data that is sent by the terminal device and that is compressed by using an image compression algorithm is low, an amount of data that needs to be sent by the terminal device is also large, and a large quantity of air interface resources need to be occupied. Therefore, how to improve accuracy of environment information constructed by the network device based on beam data sensed by the terminal device and reduce a data transmission amount becomes a technical problem to be urgently resolved.

## SUMMARY

This application provides a data transmission method and a data transmission apparatus, to help improve accuracy of environment construction and reduce a data transmission amount, to reduce an occupied air interface resource.

According to a first aspect, a data transmission method is provided. The method includes: A terminal device obtains a first dataset. The first dataset includes sampled data of a beam signal from a sensed object. The terminal device sends a first signal. The first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset.

The sensed object is a sensed environmental object, for example, an obstacle. The sensed object may be understood as any object in an environment in which a sensing device is located, or may be referred to as an environmental object. This is not limited in this application.

The sensing device is a terminal device having a sensing capability. The sensing device may send a beam signal, and the beam signal may be reflected by the sensed object.

A beam signal of the sensed object is used to implement a sensing task, for example, environment construction or electromagnetic imaging. The beam signal of the sensed object may be a beam signal that is transmitted by the sensing device and that is reflected by the sensed object, may be a beam signal received by the sensing device, or may be transmitted by the sensed object. This is not limited in this application.

The first dataset may be sampled data of at least one beam signal from the sensed object, and one beam signal may be used to collect a plurality of pieces of data. The first dataset may be represented in a form of a matrix. However, this embodiment of this application is not limited thereto.

The first dataset may be a frequency domain dataset, a time domain dataset, or a space domain dataset. This is not limited in this embodiment of this application.

If the first dataset is the frequency domain dataset, the second dataset may be the dataset converted from the first dataset. The terminal device may preprocess the first dataset to obtain the dataset converted from the first dataset. If the first dataset is the time domain dataset, or the first dataset is the space domain dataset, the second dataset may be the first dataset.

Data in the second dataset has priorities, and the first target data includes the data that is in the second dataset and whose priority is greater than or equal to the first preset threshold. The first target data may include at least one piece of data, and the first preset threshold may be a priority level. The first location data includes the location information of the first target data in the second dataset.

According to the data transmission method provided in this application, the data that is in the second dataset and whose priority is greater than or equal to the first preset threshold is determined as the first target data, the location information of the first target data in the second dataset is determined as the first location information, and target data whose priority is less than the first preset threshold and location data corresponding to the target data are discarded. In this manner, the first dataset is compressed. This can ensure as much as possible that key information is not lost, to help improve accuracy of the environment construction or the electromagnetic imaging.

With reference to the first aspect, in some implementations of the first aspect, the priority is determined based on a preset parameter.

The preset parameter may be agreed on in a protocol, may be determined by the terminal device, or may be determined by a network device. This is not limited in this embodiment of this application.

If the preset parameter is agreed on in the protocol, the terminal device may set the priority of the data in the second dataset based on the parameter agreed on in the protocol, so that signaling overheads can be reduced, and communication efficiency can be improved.

If the preset parameter is determined by the terminal device, the terminal device may autonomously determine the preset parameter. This is more flexible and has a wider application scope.

If the preset parameter is determined by the network device, the terminal device only needs to set the priority of the data in the second dataset based on a preset parameter of the network device, so that a processing resource can be saved, and a requirement on the terminal device is low.

With reference to the first aspect, in some implementations of the first aspect, the preset parameter is one of a power threshold, an energy threshold, a quantity threshold, or a data type.

With reference to the first aspect, in some implementations of the first aspect, the first signal carries the first target data and compressed first location data, and the compressed first location data is obtained by compressing the first location data based on a tree data structure.

After determining the first target data and the first location data, the terminal device may compress the first location data based on the tree data structure to obtain compressed first location data, and then perform transmission of the first target data and the compressed first location data by using the first signal.

According to the data transmission method provided in this application, the first location data may be compressed before being sent, so that a data transmission amount can be reduced, and a resource used for transmission can be reduced.

With reference to the first aspect, in some implementations of the first aspect, the tree data structure includes a quad tree and/or a combination of quad tree and binary tree.

In a possible implementation, the tree data structure may be the quad tree, and the terminal device may compress the first location data based on the quad tree, to obtain the compressed first location data.

In another possible implementation, the tree data structure may be the combination of quad tree and binary tree, and the terminal device may compress the first location data based on the combination of quad tree and binary tree, to obtain the compressed first location data.

In still another possible implementation, the tree data structure may be the quad tree and the combination of quad tree and binary tree. The terminal device may first compress the first location data by separately using the quad tree and the combination of quad tree and binary tree, then compare compression rates in the two manners, and select compressed first location data obtained in a compression manner with a higher compression rate.

According to the data transmission method provided in this application, the first location data is compressed before being sent, so that the data transmission amount can be reduced, and the resource used for transmission can be reduced. With reference to the first aspect, in some implementations of the first aspect, the first location data includes boundary information of a region in which the first target data is located in the second dataset.

When locations of the first location data in the second dataset present an aggregation feature, the terminal device may determine the boundary information of the region in which the first target data is located in the second dataset as the first location data. It should be understood that the locations of the first location data in the second dataset present the aggregation feature, in other words, the locations of the first location data in the second dataset are centralized, and may be aggregated in one or more regions.

When the second dataset includes sampled data of a plurality of beams, if sampled data of each beam in the second dataset has aggregation, and location data of different beams has different aggregation, the terminal device may use a one-dimensional interval to frame a region in which location data of each beam is located. If sampled data of each beam in the second dataset has aggregation, and location data of different beams has same aggregation, the terminal device may use a two-dimensional region to frame a region in which location data of the plurality of beams is located. The terminal device may determine location information corresponding to a boundary of the one-dimensional interval or the two-dimensional region as the first location data.

According to the data transmission method provided in this application, the boundary information of the region in which the first target region is located is determined as the first location data, and the location information of the first target region in the second dataset is represented by using a small quantity of information bits, so that the data transmission amount can be reduced, and a transmission resource can be saved.

With reference to the first aspect, in some implementations of the first aspect, the boundary information of the region in which the first target data is located includes boundary information of a plurality of regions.

With reference to the first aspect, in some implementations of the first aspect, the first signal further carries a target value of the second dataset, and the target value includes at least one of total power, total energy, average power, average energy, a power variance, or an energy variance.

The second dataset may include sampled data of one or more beams. When the second dataset includes sampled data of one beam, the terminal device calculates a target value of all sampled data of the beam, that is, at least one of the total power, the total energy, the average power, the average energy, the power variance, or the energy variance. When the second dataset includes sampled data of a plurality of beams, the terminal device may calculate a target value of all sampled data of each beam in the plurality of beams, that is, at least one of the total power, the total energy, the average power, the average energy, the power variance, or the energy variance.

According to the data transmission method provided in this application, reliability of the first target data and the first location information is improved by using the target value, so that a good environment reconstruction effect can be achieved at a receive end while the second dataset is limitedly compressed.

With reference to the first aspect, in some implementations of the first aspect, before the terminal device sends the first signal, the method further includes: The terminal device receives first resource indication information The first resource indication information indicates a first time-frequency resource. That the terminal device sends a first signal includes: The terminal device sends the first signal on the first time-frequency resource.

The first time-frequency resource is used to carry the first signal, and the terminal device may send the first signal on the first time-frequency resource.

An amount of data carried on the first time-frequency resource may be less than a sum of a data amount of second target data (including the first target data) and a data amount of second location data (including the first location data), may be equal to a sum of a data amount of the first target data and a data amount of the first location data, or may be greater than a sum of a data amount of the first target data and a data amount of the first location data. This is not limited in this embodiment of this application.

With reference to the first aspect, in some implementations of the first aspect, the amount of data carried on the first time-frequency resource is less than the sum of the data amount of the second target data and the data amount of the second location data. The second target data includes all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

When the amount of data carried on the first time-frequency resource is less than the sum of the data amount of the second target data and the data amount of the second location data, the first time-frequency resource cannot carry all the second target data and the second location data, but may carry some target data and some location data. The terminal device may determine the first target data and the first location data based on the priority order and the first time-frequency resource. In other words, the terminal device may first send data of a high priority level, and a data amount of the data is less than or equal to the amount of data carried on the first time-frequency resource. A priority of the first target data in the second target data is high, and the sum of the data amount of the first target data and the data amount of the first location data is less than or equal to the amount of data carried on the first time-frequency resource.

It should be noted that, optionally, in some cases, the sum of the data amount of the first target data and the data amount of the first location data is less than the amount of data carried on the first time-frequency resource, but it is insufficient to carry data of another priority. In this case, zeros may be added to the first target data and the first location data, so that the sum of the data amount of the first target data and the data amount of the first location data is equal to the amount of data carried on the first time-frequency resource.

If the second target data includes data of a plurality of priorities, the first target data may be data of a higher priority in the second target data. If the second target data and the second location data include one priority, the first target data may be some data of the priority.

According to the data transmission method provided in this application, data for transmission is determined based on the data amount of the first time-frequency resource, to improve data transmission flexibility.

With reference to the first aspect, in some implementations of the first aspect, the method further includes: The terminal device sends first indication information, where the first indication information indicates that data transmission is not completed; or the terminal device sends second indication information, where the second indication information indicates that data transmission is completed.

The terminal device may determine whether transmission of target data other than the first target data in the second target data and location data other than the first location data in the second location data needs to be continued. If the first target data and the first location information do not meet a compression precision requirement, the terminal device may determine to continue to perform data transmission, and send the first indication information, where the first indication information indicates that the data transmission is not completed. If the second target data and the second location information already meet the compression precision requirement, the terminal device may determine not to continue to perform data transmission, and send the second indication information, where the second indication information indicates that the data transmission is completed.

According to the data transmission method provided in this application, when the amount of data carried on the first time-frequency resource is less than the sum of the data amount of the second target data and the data amount of the second location data, transmission of some target data and some location data may be performed on the first time-frequency resource, and the terminal device may autonomously determine whether to continue to perform data transmission, to improve initiative of the terminal device.

With reference to the first aspect, in some implementations of the first aspect, an amount of data carried on the first time-frequency resource is greater than a sum of a data amount of the first target data and a data amount of the first location data. The method further includes: The terminal device sends a third signal on the first time-frequency resource. The third signal carries third target data and third location data, the third target data includes data that is in the second dataset and whose priority is less than the first preset threshold and is greater than or equal to a second preset threshold, the third location data includes location information of the third target data in the second dataset, and the second preset threshold is less than the first preset threshold.

When the amount of data carried on the first time-frequency resource is greater than the sum of the data amount of the first target data and the data amount of the first location data, in addition to the first target data and the first location information, the first time-frequency resource may further carry additional data. In this case, the terminal device may perform transmission of data whose priority is lower than the first preset threshold. The second preset threshold may be determined based on the amount of data carried on the first time-frequency resource. The third target data is data whose priority is lower than the first preset threshold but is greater than or equal to the second preset threshold, and the third location data includes the location information of the third target data in the second dataset. A sum of a data amount of the third target data, a data amount of the third location data, the data amount of the first target data, and the data amount of the first location data is less than or equal to the amount of data carried on the first time-frequency resource.

According to the data transmission method provided in this application, when the amount of data carried on the first time-frequency resource is greater than the sum of the data amount of the first target data and the data amount of the first location data, in addition to transmission of the first target data and the first location data, transmission of the third target data and the third location data may be further performed. In other words, transmission of more data may be performed. The data is used for environment construction, so that accuracy of the environment construction can be further improved.

With reference to the first aspect, in some implementations of the first aspect, the method further includes: The terminal device receives second resource indication information, where the second resource indication information indicates a second time-frequency resource; and the terminal device sends a fourth signal on the second time-frequency resource, where the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

After the terminal device sends the first signal on the first time-frequency resource, the network device may further obtain data of another priority, and the network device sends the second resource indication information to the terminal device. The second resource indication information indicates the second time-frequency resource, and the second time-frequency resource may be used to perform transmission of the data whose priority is lower than the first preset threshold. The fourth target data is data that is in the second dataset and whose priority is less than the first preset threshold but is greater than or equal to the second preset threshold. An amount of data carried on the second time-frequency resource may include a sum of a data amount of the fourth target data and a data amount of the fourth location data.

According to the data transmission method provided in this application, in addition to the transmission of the first target data and the first location data, transmission of the fourth target data and the fourth location data may be further performed. In other words, transmission of more data may be performed. The data is used for the environment construction, so that the accuracy of the environment construction can be further improved.

With reference to the first aspect, in some implementations of the first aspect, the method further includes: The terminal device receives information about the preset parameter; and the terminal device sends an amount of data of each priority in the second dataset.

The preset parameter is determined by the network device. The network device may send the information about the preset parameter to the terminal device. When requesting a time-frequency resource, the terminal device may send a request message to the network device. The request message may include the amount of data of each priority in the second dataset.

According to the data transmission method provided in this application, the terminal device sends a request message to request a time-frequency resource, where the request message may include the amount of data of each priority in the second dataset, so that the requirement on the terminal device can be reduced, and a quantity of bits used by the request message is small, to help save a bit resource.

With reference to the first aspect, in some implementations of the first aspect, the method further includes: The terminal device sends information about the preset parameter, a quantity of priorities in the second dataset, and an amount of data of each priority in the second dataset.

The preset parameter is determined by the terminal device. When requesting a time-frequency resource, the terminal device may send a request message. The request message may include the information about the preset parameter, the quantity of priorities in the second dataset, and the amount of data of each priority in the second dataset.

According to the data transmission method provided in this application, the preset parameter is determined by the terminal device. The terminal device sends a request message to request a time-frequency resource. The request message may include the information about the preset parameter, the quantity of priorities in the second dataset, and the amount of data of each priority in the second dataset, so that the network device decompresses the data. In addition, the terminal device may autonomously determine the preset parameter. This improves the initiative of the terminal device, and can be more flexibly to adapt to more application scenarios.

With reference to the first aspect, in some implementations of the first aspect, the beam signal of the sensed object is reflected by the sensed object.

According to a second aspect, a data transmission method is provided. The method includes: A network device obtains a first signal, where the first signal carries first target data and first location data; and the network device reconstructs a first dataset based on the first target data and the first location data, where the first target data includes data that is in a second dataset and whose priority is greater than or equal to a first preset threshold, the first location data includes location information of the first target data in the second dataset, the second dataset is the first dataset or a dataset converted from the first dataset, and the first dataset includes sampled data of a beam signal from a sensed object. With reference to the second aspect, in some implementations of the second aspect, the priority is determined based on a preset parameter.

With reference to the second aspect, in some implementations of the second aspect, the preset parameter is one of a power threshold, an energy threshold, a quantity threshold, or a data type.

With reference to the second aspect, in some implementations of the second aspect, the first signal carries the first target data and compressed first location data, and the compressed first location data is obtained by compressing the first location data based on a tree data structure.

With reference to the second aspect, in some implementations of the second aspect, the tree data structure includes a quad tree and/or a combination of quad tree and binary tree.

With reference to the second aspect, in some implementations of the second aspect, the first location data includes boundary information of a region in which the first target data is located in the second dataset.

With reference to the second aspect, in some implementations of the second aspect, the boundary information of the region in which the first target data is located includes boundary information of a plurality of regions.

With reference to the second aspect, in some implementations of the second aspect, the first signal further carries a target value of the second dataset, and the target value includes at least one of total power, total energy, average power, average energy, a power variance, or an energy variance.

With reference to the second aspect, in some implementations of the second aspect, before the network device obtains the first signal, the method further includes: The network device sends first resource indication information. The first resource indication information indicates a first time-frequency resource. That a network device obtains a first signal includes: The network device obtains the first signal on the first time-frequency resource.

With reference to the second aspect, in some implementations of the second aspect, an amount of data carried on the first time-frequency resource is less than a sum of a data amount of second target data and a data amount of second location data. The second target data includes all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

With reference to the second aspect, in some implementations of the second aspect, the method further includes: The network device receives first indication information, where the first indication information indicates that data transmission is not completed; or the network device receives second indication information, where the second indication information indicates that data transmission is completed.

With reference to the second aspect, in some implementations of the second aspect, an amount of data carried on the first time-frequency resource is greater than a sum of a data amount of the first target data and a data amount of the first location data. The method further includes: The network device receives a third signal on the first time-frequency resource. The third signal carries third target data and third location data, the third target data includes data that is in the second dataset and whose priority is less than the first preset threshold and is greater than or equal to a second preset threshold, the third location data includes location information of the third target data in the second dataset, and the second preset threshold is less than the first preset threshold.

With reference to the second aspect, in some implementations of the second aspect, the method further includes: The network device sends second resource indication information, where the second resource indication information indicates a second time-frequency resource; and the network device receives a fourth signal on the second resource indication information, where the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

With reference to the second aspect, in some implementations of the second aspect, the method further includes: The network device sends information about the preset parameter; and the network device receives an amount of data of each priority in the second dataset.

With reference to the second aspect, in some implementations of the second aspect, the method further includes: The network device receives information about the preset parameter, a quantity of priorities in the second dataset, and an amount of data of each priority in the second dataset.

With reference to the second aspect, in some implementations of the second aspect, the beam signal of the sensed object is reflected by the sensed object.

According to a third aspect, a data transmission apparatus is provided. The apparatus includes an obtaining unit and a transceiver unit. The obtaining unit is configured to obtain a first dataset. The first dataset includes sampled data of a beam signal from a sensed object. The transceiver unit is configured to send a first signal. The first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset. With reference to the third aspect, in some implementations of the third aspect, the priority is determined based on a preset parameter.

With reference to the third aspect, in some implementations of the third aspect, the preset parameter is one of a power threshold, an energy threshold, a quantity threshold, or a data type.

With reference to the third aspect, in some implementations of the third aspect, the first signal carries the first target data and compressed first location data, and the compressed first location data is obtained by compressing the first location data based on a tree data structure.

With reference to the third aspect, in some implementations of the third aspect, the tree data structure includes a quad tree and/or a combination of quad tree and binary tree.

With reference to the third aspect, in some implementations of the third aspect, the first location data includes boundary information of a region in which the first target data is located in the second dataset.

With reference to the third aspect, in some implementations of the third aspect, the boundary information of the region in which the first target data is located includes boundary information of a plurality of regions.

With reference to the third aspect, in some implementations of the third aspect, the first signal further carries a target value of the second dataset, and the target value includes at least one of total power, total energy, average power, average energy, a power variance, or an energy variance.

With reference to the third aspect, in some implementations of the third aspect, the transceiver unit is further configured to: receive first resource indication information, where the first resource indication information indicates a first time-frequency resource; and send the first signal on the first time-frequency resource.

With reference to the third aspect, in some implementations of the third aspect, an amount of data carried on the first time-frequency resource is less than a sum of a data amount of second target data and a data amount of second location data. The second target data includes all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

With reference to the third aspect, in some implementations of the third aspect, the transceiver unit is further configured to: send first indication information, where the first indication information indicates that data transmission is not completed; or send second indication information, where the second indication information indicates that data transmission is completed.

With reference to the third aspect, in some implementations of the third aspect, the amount of data carried on the first time-frequency resource is greater than a sum of a data amount of the first target data and a data amount of the first location data. The transceiver unit is further configured to send a third signal on the first time-frequency resource. The third signal carries third target data and third location data, the third target data includes data that is in the second dataset and whose priority is less than the first preset threshold and is greater than or equal to a second preset threshold, the third location data includes location information of the third target data in the second dataset, and the second preset threshold is less than the first preset threshold.

With reference to the third aspect, in some implementations of the third aspect, the transceiver unit is further configured to: receive second resource indication information, where the second resource indication information indicates a second time-frequency resource; and send a fourth signal on the second time-frequency resource, where the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

With reference to the third aspect, in some implementations of the third aspect, the transceiver unit is further configured to: receive information about the preset parameter; and send an amount of data of each priority in the second dataset.

With reference to the third aspect, in some implementations of the third aspect, the transceiver unit is further configured to send information about the preset parameter, a quantity of priorities in the second dataset, and an amount of data of each priority in the second dataset.

With reference to the third aspect, in some implementations of the third aspect, the beam signal of the sensed object is reflected by the sensed object.

According to a fourth aspect, a data transmission apparatus is provided. The apparatus includes an obtaining unit and a processing unit. The obtaining unit is configured to obtain a first signal. The first signal carries first target data and first location data. The processing unit is configured to reconstruct a first dataset based on the first target data and the first location data. The first target data includes data that is in a second dataset and whose priority is greater than or equal to a first preset threshold, the first location data includes location information of the first target data in the seco nd dataset, the second dataset is the first dataset or a dataset converted from the first dataset, and the first dataset includes sampled data of a beam signal from a sensed object.

With reference to the fourth aspect, in some implementations of the fourth aspect, the priority is determined based on a preset parameter.

With reference to the fourth aspect, in some implementations of the fourth aspect, the preset parameter is one of a power threshold, an energy threshold, a quantity threshold, or a data type.

With reference to the fourth aspect, in some implementations of the fourth aspect, the first signal carries the first target data and compressed first location data, and the compressed first location data is obtained by compressing the first location data based on a tree data structure.

With reference to the fourth aspect, in some implementations of the fourth aspect, the tree data structure includes a quad tree and/or a combination of quad tree and binary tree.

With reference to the fourth aspect, in some implementations of the fourth aspect, the first location data includes boundary information of a region in which the first target data is located in the second dataset.

With reference to the fourth aspect, in some implementations of the fourth aspect, the boundary information of the region in which the first target data is located includes boundary information of a plurality of regions.

With reference to the fourth aspect, in some implementations of the fourth aspect, the first signal further carries a target value of the second dataset, and the target value includes at least one of total power, total energy, average power, average energy, a power variance, or an energy variance.

With reference to the fourth aspect, in some implementations of the fourth aspect, the apparatus further includes a transceiver unit. The transceiver unit is configured to send first resource indication information. The first resource indication information indicates a first time-frequency resource. The obtaining unit is further configured to obtain the first signal on the first time-frequency resource.

With reference to the fourth aspect, in some implementations of the fourth aspect, an amount of data carried on the first time-frequency resource is less than a sum of a data amount of second target data and a data amount of second location data. The second target data includes all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

With reference to the fourth aspect, in some implementations of the fourth aspect, the transceiver unit is further configured to: receive first indication information, where the first indication information indicates that data transmission is not completed; or receive second indication information, where the second indication information indicates that data transmission is completed.

With reference to the fourth aspect, in some implementations of the fourth aspect, the amount of data carried on the first time-frequency resource is greater than a sum of a data amount of the first target data and a data amount of the first location data. The transceiver unit is further configured to receive a third signal on the first time-frequency resource. The third signal carries third target data and third location data, the third target data includes data that is in the second dataset and whose priority is less than the first preset threshold and is greater than or equal to a second preset threshold, the third location data includes location information of the third target data in the second dataset, and the second preset threshold is less than the first preset threshold.

With reference to the fourth aspect, in some implementations of the fourth aspect, the transceiver unit is further configured to: send second resource indication information, where the second resource indication information indicates a second time-frequency resource; and receive a fourth signal on the second resource indication information, where the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

With reference to the fourth aspect, in some implementations of the fourth aspect, the transceiver unit is further configured to: send information about the preset parameter; and receive an amount of data of each priority in the second dataset.

With reference to the fourth aspect, in some implementations of the fourth aspect, the transceiver unit is further configured to receive information about a preset parameter, a quantity of priorities in the second dataset, and an amount of data of each priority in the second dataset.

With reference to the fourth aspect, in some implementations of the fourth aspect, the beam signal of the sensed object is reflected by the sensed object.

According to a fifth aspect, a data transmission apparatus is provided, including a processor and a memory. The memory is configured to store a computer program, and the processor is configured to: invoke the computer program from the memory and run the computer program, so that the apparatus performs the method according to any possible implementation of the first aspect, or the method according to any possible implementation of the second aspect.

Optionally, there are one or more processors, and there are one or more memories.

Optionally, the memory may be integrated with the processor, or the memory and the processor are separately disposed.

Optionally, the data transmission apparatus further includes a transmitter (transmitter) and a receiver (receiver). The transmitter and the receiver may be separately disposed, or may be integrated together to obtain a transceiver (transceiver).

According to a sixth aspect, this application provides a processor, including an input circuit, an output circuit, and a processing circuit. The processing circuit is configured to: receive a signal through the input circuit, and transmit a signal through the output circuit, so that the processor performs the method according to any possible implementation of the first aspect or the method according to any possible implementation of the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a seventh aspect, a communication system is provided. The communication system includes an apparatus configured to implement the method according to any one of the first aspect or the possible implementations of the first aspect, and an apparatus configured to implement the method according to any one of the second aspect or the possible implementations of the second aspect.

According to an eighth aspect, a terminal device is provided, including a communication interface and a logic circuit, where the logic circuit is configured to obtain a first dataset, and the communication interface is configured to send a first signal, so that the terminal device performs the method according to any possible implementation of the first aspect.

According to a ninth aspect, a network device is provided, including a communication interface and a logic circuit, where the communication interface is configured to obtain a first signal, and the logic circuit is configured to reconstruct a first dataset, so that the network device performs the method according to any possible implementation of the second aspect.

According to a tenth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or the method according to any possible implementation of the second aspect.

According to an eleventh aspect, a computer program product is provided. The computer program product includes a computer program (which may also be referred to as code or instructions). When the computer program is run, a computer is enabled to perform the method according to any possible implementation of the first aspect, or the method according to any possible implementation of the second aspect.

For technical effects that may be achieved by any one of the third aspect to the eleventh aspect and any possible design of any one of the third aspect to the eleventh aspect, refer to descriptions of technical effects that may be brought by the first aspect or the second aspect. Details are not described herein again.

## BRIEF DESCRIPTION OF DRAWINGS

FIG. 1 is a diagram of a communication system applicable to an embodiment of this application;

FIG. 2 is a schematic flowchart of a data transmission method according to an embodiment of this application;

FIG. 3 is a diagram of a second dataset according to an embodiment of this application;

FIG. 4 is a diagram of another second dataset according to an embodiment of this application;

FIG. 5 is a diagram of a bitmap according to an embodiment of this application;

FIG. 6 is a diagram of a quad tree-based compression method according to an embodiment of this application;

FIG. 7 is a diagram of another bitmap according to an embodiment of this application;

FIG. 8 is a diagram of a compression method that is based on a combination of quad tree and binary tree according to an embodiment of this application;

FIG. 9 is a diagram of sampled data of a beam according to an embodiment of this application;

FIG. 10 is a schematic flowchart of another data transmission method according to an embodiment of this application;

FIG. 11 is a schematic flowchart of still another data transmission method according to an embodiment of this application;

FIG. 12 is a block diagram of a request message according to an embodiment of this application;

FIG. 13 is a schematic flowchart of another data transmission method according to an embodiment of this application;

FIG. 14 is a block diagram of another request message according to an embodiment of this application;

FIG. 15 is a schematic flowchart of still another data transmission method according to an embodiment of this application;

FIG. 16 is a block diagram of a data transmission apparatus according to an embodiment of this application;

FIG. 17 is a block diagram of another data transmission apparatus according to an embodiment of this application; and

FIG. 18 is a block diagram of still another data transmission apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a 6th generation (6th generation, 6G) mobile communication system, a worldwide interoperability for microwave access (worldwide interoperability for microwave access, WiMAX) communication system, and another evolved communication system. The 5G system usually includes the following three major application scenarios: enhanced mobile broadband (enhanced mobile broadband, eMBB), ultra-reliable and low-latency communication (ultra-reliable and low-latency communications, URLLC), and massive machine-type communications (massive machine type of communications, mMTC), and various future communication systems.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminals are as follows: a vehicle, a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with the wireless communication function, a computing device or another processing device connected to a wireless modem, a vehicle-mounted device, a wearable device, an uncrewed aerial vehicle, a terminal device in a 5G network, a terminal device in a future evolved public land mobile network (public land mobile network, PLMN), and the like. This is not limited in embodiments of this application.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things. In addition, a network device in embodiments of this application may be a device configured to communicate with the terminal device. The network device may also be referred to as an access network device or a radio access network device, may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a WLAN, may be a gNB in a new radio (new radio, NR) system, may be a satellite base station in a satellite communication system, or may be a device that bears a base station function and that has various forms, or the like. This is not limited in embodiments of this application.

In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk drive, a floppy disk or a magnetic tape), an optical disc (for example, a compact disc (compact disc, CD) or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

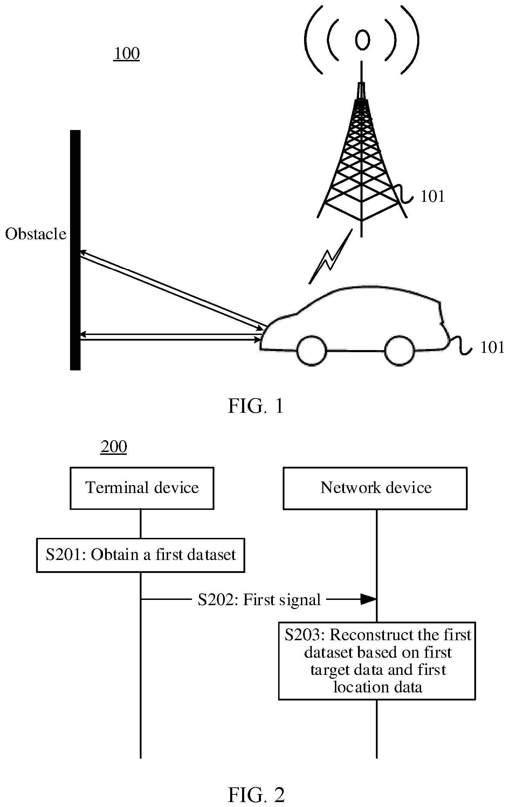

For ease of understanding embodiments of this application, a communication system 100 applicable to embodiments of this application is first described in detail with reference to FIG. 1.

The communication system 100 includes a vehicle 101 and a network device 102. The vehicle 101 has a sensing capability and can transmit a beam around the vehicle 101. The beam transmitted by the vehicle 101 is reflected after the beam encounters an obstacle. After receiving a reflected beam, the vehicle 101 compresses beam data by using an image-related algorithm such as a discrete cosine transform (discrete cosine transform, DCT) algorithm or a wavelet transform algorithm, and sends compressed beam data to the network device 102. The network device 102 receives the compressed beam data, and may construct environment information based on the compressed beam data. For example, the network device 102 may construct a shape of the obstacle, and calculate a distance from the obstacle to a terminal device.

However, a person skilled in the art finds that accuracy of the environment information constructed by the network device 102 based on the beam data sent by the vehicle 101 is low. It is found through research that the vehicle 101 performs compression by using the image-related algorithm because data corresponding to a reflected beam may be represented in a form of a two-dimensional floating point number matrix. In this compression manner, a feature of environment construction is not considered, and key information of the environment construction may be lost. Consequently, the accuracy of the environment construction is low.

In view of this, embodiments of this application provide a data transmission method and a data transmission apparatus, to help improve the accuracy of the environment construction.

To clearly describe the technical solutions in embodiments of this application, words such as "first" and "second" are used in embodiments of this application to distinguish between same items or similar items with basically same functions or roles. For example, a first dataset and a second dataset are used to distinguish between different datasets, and a sequence of the first dataset and the second dataset is not limited. A person skilled in the art may understand that the words such as "first" and "second" do not limit a quantity or an execution sequence, and the words such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Specifically, the words such as "example" or "for example" are used to present related concepts in a specific manner.

In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c, where a, b, and c may be singular or plural.

In addition, a "protocol" in embodiments of this application may be a standard protocol in the communication field, for example, may include a long term evolution (long term evolution, LTE) protocol, a new radio (new radio, NR) protocol, a 6G protocol, and a related protocol applied to a future communication system. This is not limited in this application.

In embodiments shown below, "protocol agreement" may be defined in a protocol or predefined. The "protocol agreement" may be implemented by pre-storing corresponding code or a table in a device (for example, including a terminal device and a network device); or implemented in another manner that may indicate related information. A specific implementation of the "protocol agreement" is not limited in this application.

The following describes in detail embodiments provided in this application.

In embodiments of this application, a terminal device and a network device are used as examples for description. It should be understood that the terminal device may be replaced with an apparatus or a chip that can implement a function similar to that of the terminal device, or the network device may be replaced with an apparatus or a chip that can implement a function similar to that of the network device. A name of the apparatus or chip is not limited in embodiments of this application.

FIG. 2 is a schematic flowchart of a data transmission method 200 according to an embodiment of this application. The method may be applied to the communication system 100 in FIG. 1, but this embodiment of this application is not limited thereto. The method 200 may be performed by a terminal device, for example, the vehicle 101.

As shown in FIG. 2, the method 200 may include the following steps.

S201: The terminal device obtains a first dataset, where the first dataset includes sampled data of a beam signal from a sensed object.

The sensed object is a sensed environmental object, for example, an obstacle. The sensed object may be understood as any object in an environment in which a sensing device is located, or may be referred to as an environmental object. This is not limited in this embodiment of this application.

The sensing device is a terminal device having a sensing capability, for example, the vehicle 101. The sensing device may send a beam signal, and the beam signal may be reflected by the sensed object.

The beam signal of the sensed object is used to implement a sensing task, for example, environment construction or electromagnetic imaging. The beam signal of the sensed object may be a beam signal that is transmitted by the sensing device and that is reflected by the sensed object, may be a beam signal received by the sensing device, or may be transmitted by the sensed object. This is not limited in this embodiment of this application.

Optionally, the beam signal of the sensed object is reflected by the sensed object. The terminal device may have a sensing capability, and may send a beam to surroundings. The beam may be reflected by the sensed object, to obtain a reflected beam signal. Alternatively, the terminal device may not have a sensing capability, and may receive sampled data of a beam signal of another terminal device that has a sensing capability.

The first dataset may be sampled data of at least one beam signal from the sensed object, and one beam signal may be used to collect a plurality of pieces of data.

For example, the first dataset may be sampled data of 256 beam signals from the sensed object, and one beam signal may be used to collect 1036 pieces of data. In this case, the first dataset may include 256* 1036 pieces of data.

The first dataset may be represented in a form of a matrix. However, this embodiment of this application is not limited thereto. For example, if the first dataset includes 256* 1036 pieces of data, the first dataset may be represented by a matrix of 256 rows and 1036 columns.

The first dataset may also be referred to as native data. This is not limited in this embodiment of this application. The first dataset may be a frequency domain dataset, a time domain dataset, or a space domain dataset. This is not limited in this embodiment of this application.

S202: The terminal device sends a first signal, where the first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset. Correspondingly, a network device may obtain the first signal.

If the first dataset is the frequency domain dataset, the second dataset may be the dataset converted from the first dataset. The terminal device may preprocess the first dataset to obtain the dataset converted from the first dataset. For example, the terminal device may perform inverse fast Fourier transform (inverse fast Fourier transform, IFFT) on the first dataset, to transform frequency domain into time domain, to obtain a time domain dataset, that is, obtain the second dataset.

If the first dataset is the time domain dataset, or the first dataset is the space domain dataset, the second dataset may be the first dataset.

Data in the second dataset has priorities, and the first target data includes the data that is in the second dataset and whose priority is greater than or equal to the first preset threshold. The first target data may include at least one piece of data, and the first preset threshold may be a priority level. The first location data includes the location information of the first target data in the second dataset.

For example, the second dataset is represented by a matrix of 256 rows and 1036 columns, and each row of data may include data of a plurality of priorities. For example, each row of data includes data of five priorities: data of a first priority, data of a second priority, data of a third priority, data of a fourth priority, and data of a fifth priority. The first priority, the second priority, the third priority, the fourth priority, and the fifth priority are sorted in descending order, and the first preset threshold may be the third priority. Data that is in each row of data in the second dataset and whose priority is greater than or equal to the third priority is the first target data. In other words, the first target data includes the data of the first priority, the data of the second priority, and the data of the third priority. The first location data includes the location information of the first target data in the second dataset, that is, location information of the data of the first priority, the data of the second priority, and the data of the third priority in the matrix.

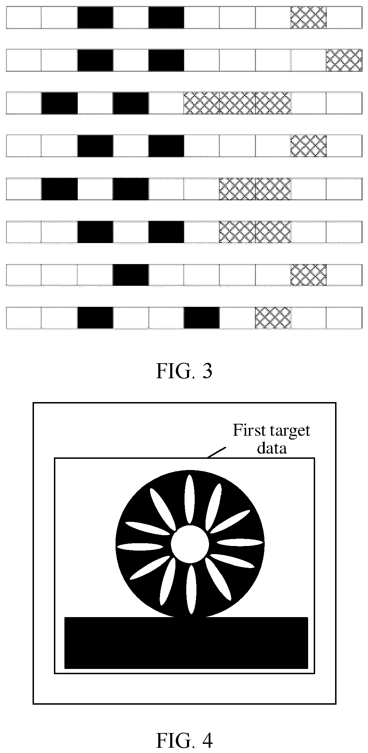

For another example, FIG. 3 is a diagram of a second dataset. The second dataset is described by using a matrix of 8 rows and 10 columns. Each row of data may include data of three priorities. Data of a first priority is data filled with black, data of a second priority is data filled with a pattern, and data of a third priority is data filled with white. The first priority, the second priority, and the third priority are sorted in descending order. The first preset threshold may be the first priority. The terminal device may determine data corresponding to the first priority, that is, the data filled with black, as the first target data, and determine location information of the data filled with black in the second dataset as the first location data.

For still another example, FIG. 4 is a diagram of a second dataset. In an electromagnetic imaging scenario, the second dataset may be data corresponding to an image, and a target object generally exists in the image. The terminal device may determine, by using the first preset threshold, data corresponding to the target object as the first target data, and determine a location of the first target data in the image as the first location data.

The first preset threshold may be determined by the terminal device, or may be determined by the network device. This is not limited in this embodiment of this application. The first preset threshold may be determined based on a time-frequency resource and/or compression precision. This embodiment of this application is not limited thereto. Optionally, if the first preset threshold is determined based on the compression precision, the terminal device may determine, as the first target data, data that is in the second dataset and whose priority meets the compression precision, and determine a location of the first target data in the second dataset as the first location data. A lowest priority level in the data whose priority meets the compression precision is the first preset threshold.

The terminal device may include the first target data and the first location data on the first signal, and send the first signal to transmit the first target data and the first location data. The network device may obtain the first signal, to obtain the first target data and the first location data.

S203: The network device reconstructs the first dataset based on the first target data and the first location data.

The network device may obtain the second dataset based on the first target data and the first location data, and reconstruct the first dataset to implement a sensing task, for example, environment construction or electromagnetic imaging.

According to the data transmission method provided in this embodiment of this application, the data that is in the second dataset and whose priority is greater than or equal to the first preset threshold is determined as the first target data, the location information of the first target data in the second dataset is determined as the first location information, and target data whose priority is less than the first preset threshold and location data corresponding to the target data are discarded. In this manner, the first dataset is compressed. This can ensure as much as possible that key information is not lost, to help improve accuracy of the environment construction or the electromagnetic imaging.

In an optional embodiment, a priority of data in the second dataset may be determined based on a preset parameter. The preset parameter may be agreed on in a protocol, may be determined by the terminal device, or may be determined by the network device. This is not limited in this embodiment of this application.

If the preset parameter is agreed on in the protocol, the terminal device may set the priority of the data in the second dataset based on the parameter agreed on in the protocol, so that signaling overheads can be reduced, and communication efficiency can be improved.

If the preset parameter is determined by the terminal device, the terminal device may autonomously determine the preset parameter. This is more flexible and has a wider application scope.

If the preset parameter is determined by the network device, the terminal device only needs to set the priority of the data in the second dataset based on a preset parameter of the network device, so that a processing resource can be saved, and a requirement on the terminal device is low.

Optionally, the preset parameter may be one or more of a power threshold, an energy threshold, a quantity threshold, or a data type.

In a first possible implementation, the priority of the data in the second dataset may be determined based on the power threshold. The power threshold may be one value, or may be a plurality of values. This is not limited in this embodiment of this application. When the power threshold is one value, the terminal device may divide the data in the second dataset into data of two priorities. Data of one priority is data higher than the power threshold, and data of the other priority is data lower than the power threshold. When the power threshold is a plurality of values, the terminal device may divide the data in the second dataset into data of a plurality of priorities.

For example, when the power threshold is one value, the power threshold may be average power, and the average power may be an average value of maximum power and minimum power of the data in the second dataset. When the power threshold is a plurality of values, for example, n values, the terminal device may divide the data in the second dataset into data of n+1 priorities.

If the maximum power of the data in the second dataset is $P_{max}$ and the minimum power is $P_{min}$, the terminal device may evenly divide the maximum power $P_{max}$ and the minimum power $P_{min}$ into n+1 parts by using

$$delta = \frac{P_{max} - P_{min}}{n+1}$$

a formula . Data of a first priority may be data less than the maximum power $P_{max}$ but greater than or equal to $P_{max}$-delta, data of a second priority may be data less than the maximum power $P_{max}$-delta but greater than or equal to $P_{max}$-2*delta, and data of a third priority may be data less than the maximum power $P_{max}$-delta but greater than or equal to $P_{max}$-2*delta. By analogy, data of an $(n+1)^{th}$ priority may be data less than maximum power $P_{max}$-n*delta but greater than or equal to $P_{max}$-(n+1)*delta (that is, $P_{min}$). Certainly, the threshold may alternatively be set in a nonuniform manner based on a requirement. Details are not described herein.

For example, the second dataset is represented by a matrix of 256 rows and 1036 columns, and power of each piece of data may be obtained in time domain for the data in the second dataset. The terminal device may set priorities for data row by row based on the power threshold. When the power threshold has two values: threshold 1 and threshold 2 (the threshold 1 is greater than the threshold 2), the terminal device may divide the data in the second dataset into data of three priorities based on the two thresholds. The data of the three priorities may include data of a first priority, data of a second priority, and data of a third priority. The data of the first priority may be data greater than the threshold 1, the data of the second priority may be data less than the threshold 1 but greater than the threshold 2, and the data of the third priority may be data less than the threshold 2.

In a second possible implementation, the priority of the data in the second dataset may be determined based on the energy threshold. The power threshold may be one value, or may be a plurality of values. This is not limited in this embodiment of this application. An energy threshold solution is similar to the foregoing power threshold solution. Details are not described herein again.

In a third possible implementation, the priority of the data in the second dataset may be determined based on the quantity threshold.

The quantity threshold is a data amount threshold. The terminal device may set a data amount of each priority, and determine the priority of the data in the second dataset by using the data amount.

In a fourth possible implementation, the priority of the data in the second dataset may be determined based on the data type.

For example, in the scenario shown in FIG. 4, the data type may include data corresponding to a target object and data corresponding to a non-target object. The data corresponding to the target object may be data of a high priority, and the data corresponding to the non-target object may be data of a low priority.

In the foregoing four possible implementations, for the second dataset, the terminal device may set a priority for the data in the second dataset based on energy or power of a time domain (or referred to as a latency domain) sampling point, or for electromagnetic imaging data, the terminal device may set a priority for the data in the second dataset based on total energy or total power of data corresponding to an entire beam in space domain.

The preset parameter may be a plurality of the power threshold, the energy threshold, the quantity threshold, or the data type.

For example, in the scenario shown in FIG. 4, the terminal device may first determine, based on the data type, the data corresponding to the target object as data of a high priority, determine the data corresponding to the non-target object as data of a low priority, and then divide the data corresponding to the target object into different priorities based on the power threshold.

In an optional embodiment, the first signal in S 102 may carry the first target data and compressed first location data, and the compressed first location data is obtained by compressing the first location data based on a tree data structure. After determining the first target data and the first location data, the terminal device may compress the first location data based on the tree data structure to obtain the compressed first location data, and then perform transmission of the first target data and the compressed first location data by using the first signal.

According to the data transmission method provided in this embodiment of this application, the first location data may be compressed before being sent, so that a data transmission amount can be reduced, and a resource used for transmission can be reduced.

Optionally, the tree data structure may include a quad tree and/or a combination of quad tree and binary tree, or may be an octree or a higher-order tree data structure.

In a possible implementation, the tree data structure may be the quad tree, and the terminal device may compress the first location data based on the quad tree, to obtain the compressed first location data. The second dataset may be represented in a form of a bitmap (bitmap), and a value of the first location data in the bitmap is 1. The terminal device may compress the bitmap based on a quad tree, to perform transmission of the first location data by using a small quantity of bits.

In an environment reconstruction scenario, a bitmap corresponding to the first location data has high sparseness, and non-zero locations present a specific aggregation feature in space. Therefore, the quad tree may be used for effective compression.

If a dimension of the bitmap is m rows and n columns, the terminal device may first extend the bitmap to a bitmap of $2^L$ rows and $2^L$ columns. L may be determined by using the following formula:

$$\begin{cases} l_m = [\log(m)] \\ l_n = [\log(n)] \\ L = \max\{l_m, l_n\} \end{cases}$$

The terminal device may expand a new bitmap layer by layer based on the quad tree. If all locations corresponding to a node at a layer of the quad tree are zero, the node is a leaf node and a value of the node is zero, and the terminal device stops expanding downward. If a location corresponding to a node at a layer of the quad tree includes a non-zero location, the terminal device continues to expand downward.

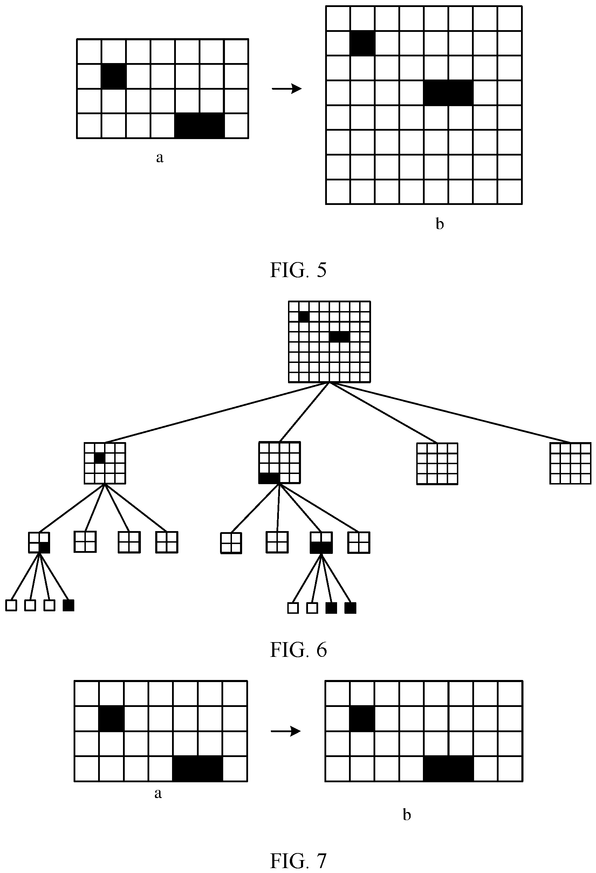

For example, FIG. 5 is a diagram of a bitmap. As shown in a in FIG. 5, the second dataset is represented by a bitmap of four rows and seven columns, where a region filled with black is the first location data and a corresponding value is 1, and a corresponding value of a region filled with white is 0.

The terminal device may first calculate an extended dimension. When m=4, the terminal device takes a log of 4 and then performs rounding to obtain $l_m = 2$. When n=7, the terminal device takes a log of 7 and then performs rounding to obtain $l_n = 3$. A largest value of $l_m$ and $l_n$ is taken to obtain $L=3$, and $2^L=8$. In this case, a dimension of an extended bitmap is a bitmap of eight rows and eight columns. The terminal device may fill four rows with 0 downward on the bitmap of four rows and seven columns, and then fill one column with 0 leftward, to obtain the bitmap of eight rows and eight columns, as shown in b in FIG. 5.

FIG. 6 is a diagram of a quad tree-based compression method. As shown in FIG. 6, at a first layer, the terminal device performs quad tree expansion on a bitmap of eight rows and eight columns. At a second layer, the terminal device divides the bitmap of eight rows and eight columns at the first layer into four quadrants, where each quadrant is a bitmap of four rows and four columns, bitmaps of a first quadrant and a second quadrant include a value 1, and bitmaps of a third quadrant and a fourth quadrant are all 0. In this case, the bitmaps of the first quadrant and the second quadrant continue to be expanded downward, and the bitmaps of the third quadrant and the fourth quadrant stop being expanded downward.

At a third layer, the terminal device divides the bitmap of four rows and four columns in the first quadrant at the second layer into four quadrants, where each quadrant is a bitmap of two rows and two columns, a bitmap of a first quadrant includes a value 1, and bitmaps of a second quadrant, a third quadrant, and a fourth quadrant are all 0. In this case, the bitmap of the first quadrant continues to be expanded downward, and the bitmaps of the second quadrant, the third quadrant, and the fourth quadrant stop being expanded downward. Similarly, the terminal device divides the bitmap of four rows and four columns in the second quadrant at the second layer into four quadrants, where each quadrant is a bitmap of two rows and two columns, bitmaps of a first quadrant, a second quadrant, and a fourth quadrant are all 0, and a third quadrant includes a value 1. In this case, a bitmap of the third quadrant continues to be expanded downward, and the bitmaps of the first quadrant, the second quadrant, and the fourth quadrant stop being expanded downward.

At a fourth layer, the terminal device divides the bitmap of two rows and two columns in the first quadrant at the third layer into four quadrants, where each quadrant is a bitmap of one row and one column, bitmaps of a first quadrant, a second quadrant, and a third quadrant are all 0, and a fourth quadrant includes a value 1. The terminal device divides the bitmap of two rows and two columns in the third quadrant at the third layer into four quadrants, where each quadrant is a bitmap of one row and one column, bitmaps of a first quadrant and a second quadrant are all 0, and a third quadrant and a fourth quadrant include a value 1.

In a quad tree manner, one bit is needed for the first layer, four bits are needed for the second layer, eight bits are needed for the third layer, and eight bits are needed for the fourth layer. In this case, the terminal device needs a total of 1+4+8+8=21 bits to perform transmission of the first location data. Before compression, the terminal device needs a total of 4*7=28 bits to perform transmission of the first location data. Therefore, in the quad tree manner, the terminal device can save 28-21=7 bits.

It should be noted that, in this example, a dimension is small, and fewer bits are saved. In actual use, when a dimension of the second dataset is generally large and the first location data is sparse, more bits can be saved.

Optionally, the terminal device may determine whether the compressed first location data meets a compression requirement. If the compressed first location data meets the compression requirement, transmission of the compressed first location data may be performed. If the compressed first location data does not meet the compression requirement, the compressed first location data may be compressed again by using another compression method (for example, an adaptive arithmetic code) until the compression requirement is met.

In another possible implementation, the tree data structure may be the combination of quad tree and binary tree, and the terminal device may compress the first location data based on the combination of quad tree and binary tree, to obtain the compressed first location data.

A dimension of the bitmap is m rows and n columns. When a value difference between m and n is large, for example, m=288, and n=1301, compression efficiency may be further improved by using the combination of quad tree and binary tree.

If the dimension of the bitmap is m rows and n columns, the terminal device may first extend the bitmap to a bitmap of $2^{l_m}$ rows and $2^{l_n}$ columns. $l_m$ and $l_n$ may be determined by using the following formula:

$$\begin{cases} l_m = [\log(m)] \\ l_n = [\log(n)] \end{cases}$$

The terminal device may expand a new bitmap layer by layer based on the quad tree. If all locations corresponding to a node at a layer of the quad tree are zero, the node is a leaf node and a value of the node is zero, and the terminal device stops expanding downward. If a location corresponding to a node at a layer of the quad tree includes a non-zero location, the terminal device continues to expand downward. When the quad tree is expanded to a layer, further division cannot be performed by using the quad tree but can be performed by using a binary tree. In this case, further expansion is performed in a form of the binary tree based on the quad tree.

For example, FIG. 7 is a diagram of a bitmap. As shown in a in FIG. 7, the second dataset is represented by a bitmap of four rows and seven columns, where a region filled with black is the first location data and a corresponding value is 1, and a corresponding value of a region filled with white is 0.

The terminal device may first calculate an extended dimension. When m=4, the terminal device takes a log of 4 and then performs rounding to obtain $l_m$ = 2. When n=7, the terminal device takes a log of 7 and performs rounding to obtain $l_n$=3, $2^{l_m}$ =4, and $2^{l_n}$ =8. In this case, a dimension of an extended bitmap is a bitmap of four rows and eight columns. The terminal device may fill one column with 0 leftward on the bitmap of four rows and seven columns, to obtain the bitmap of four rows and eight columns, as shown in b in FIG. 7.

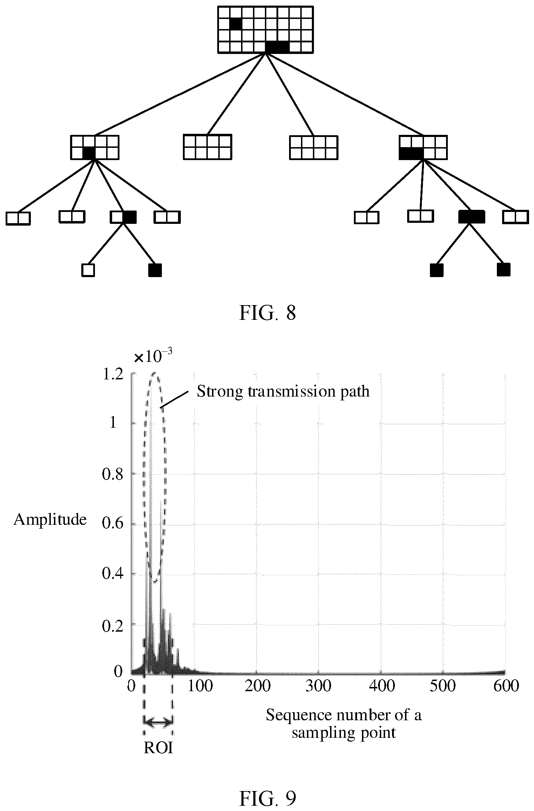

FIG. 8 is a diagram of a compression method that is based on a combination of quad tree and binary tree. As shown in FIG. 8, at a first layer, the terminal device performs quad tree expansion on a bitmap of four rows and eight columns. At a second layer, the terminal device divides the bitmap of four rows and eight columns at the first layer into four quadrants, where each quadrant is a bitmap of two rows and four columns, bitmaps of a first quadrant and a fourth quadrant include a value 1, and bitmaps of a second quadrant and a third quadrant are all 0. In this case, the bitmaps of the first quadrant and the fourth quadrant continue to be expanded downward, and the bitmaps of the second quadrant and the third quadrant stop being expanded downward.

At a third layer, the terminal device divides the bitmap of two rows and four columns in the first quadrant at the second layer into four quadrants, where each quadrant is a bitmap of one row and two columns, a bitmap of a third quadrant includes a value 1, and bitmaps of a first quadrant, a second quadrant, and a fourth quadrant are all 0. In this case, the bitmap of the third quadrant continues to be expanded downward, and the bitmaps of the first quadrant, the second quadrant, and the fourth quadrant stop being expanded downward. Similarly, the terminal device divides the bitmap of two rows and four columns in the fourth quadrant at the second layer into four quadrants, where each quadrant is a bitmap of one row and two columns, bitmaps of a first quadrant, a second quadrant, and a fourth quadrant are all 0, and a third quadrant includes a value 1. In this case, a bitmap of the third quadrant continues to be expanded downward, and the bitmaps of the first quadrant, the second quadrant, and the fourth quadrant stop being expanded downward. At a fourth layer, the terminal device divides the bitmap of one row and two columns in the third quadrant at the third layer into a left subtree and a right subtree, where each subtree is a bitmap of one row and one column, a value of the left subtree is 0, and a value of the right subtree is 1. Similarly, the terminal device divides the bitmap of one row and two columns in the third quadrant at the third layer into a left subtree and a right subtree, where each subtree is a bitmap of one row and one column, a value of the left subtree is 1, and a value of the right subtree is 1.

In a manner of the combination of quad tree and binary tree, one bit is needed for the first layer, four bits are needed for the second layer, eight bits are needed for the third layer, and four bits are needed for the fourth layer. In this case, the terminal device needs a total of 1+4+8+4=17 bits to perform transmission of the first location data. Before compression, the terminal device needs a total of 4*7=28 bits to perform transmission of the first location data. Therefore, in the manner of the combination of quad tree and binary tree, the terminal device can save 28-17=11 bits. In still another possible implementation, the tree data structure may be the quad tree and the combination of quad tree and binary tree. The terminal device may first compress the first location data by separately using the quad tree and the combination of quad tree and binary tree, then compare compression rates in the two manners, and select compressed first location data obtained in a compression manner with a higher compression rate.

This manner helps ensure abetter compression rate, and may be used in different scenarios, and is more widely applied. In another possible implementation, the tree data structure may be an octree. The second dataset may be sampled data of a plurality of beams, and the plurality of beams may correspond to three dimensions in three-dimensional space. The terminal device may construct a cube by using data of the three dimensions. After determining the first target data and the first location data according to the method 200, the terminal device may compress the first location data based on the octree, to obtain compressed first location data.

It should be noted that the terminal device may alternatively compress the first location by using higher-order tree data structures. Details are not described herein again.

In an optional embodiment, the first signal may carry compressed first target data and first location data.

The first target data may include data of one or more priorities. When the first target data includes data of one priority, the terminal device may compress the first target data to obtain the compressed first target data, and then perform transmission of the compressed first target data.

When the first target data includes data of a plurality of priorities, the terminal device may compress data of some of the plurality of priorities, and may not compress other data, to reduce data distortion.

For example, the first target data may include data of five priorities: data of a first priority, data of a second priority, data of a third priority, data of a fourth priority, and data of a fifth priority. The terminal device may compress the data of the first priority, the data of the second priority, and the data of the fifth priority, and may not compress the data of the third priority and the data of the fourth priority.

When data of two or more priorities is compressed, different compression manners may be used for data of different priorities, or a same compression manner may be used for data of different priorities. This is not limited in this embodiment of this application. The compression manner may be quantization or entropy encoding, and the quantization may be scalar quantization, vector quantization, differential quantization, or the like. This embodiment of this application is not limited thereto.

When a same compression manner is used for data of different priorities, a same compression parameter may be reused for the data of different priorities. For example, same compression precision may be used for the data of different priorities.

When different compression manners are used for data of different priorities, different compression parameters may be used for the different compression manners. For example, data of a higher priority level uses higher compression precision, and data of a lower priority level uses lower compression precision.

According to the data transmission method provided in this embodiment of this application, the first target data is compressed before being sent, so that a data transmission amount can be reduced, and a resource used for transmission can be reduced.

In an optional embodiment, the first location data includes boundary information of a region in which the first target data is located in the second dataset.

When locations of the first location data in the second dataset present an aggregation feature, the terminal device may determine the boundary information of the region in which the first target data is located in the second dataset as the first location data. It should be understood that the locations of the first location data in the second dataset present the aggregation feature, in other words, the locations of the first location data in the second dataset are centralized, and may be aggregated in one or more regions.

When the second dataset includes sampled data of a plurality of beams, if sampled data of each beam in the second dataset has aggregation, and location data of different beams has different aggregation, the terminal device may use a one-dimensional interval to frame a region in which location data of each beam is located. If sampled data of each beam in the second dataset has aggregation, and location data of different beams has same aggregation, the terminal device may use a two-dimensional region to frame a region in which location data of the plurality of beams is located. The terminal device may determine location information corresponding to a boundary of the one-dimensional interval or the two-dimensional region as the first location data.

For example, FIG. 9 is a diagram of sampled data of a beam. The sampled data of the beam may be time domain data. A horizontal coordinate of the chart represents a sequence number of a sampling point, and a vertical coordinate represents an amplitude of the sampling point. The terminal device may determine the first target data in two manners. In the first manner, a power threshold delta is set, and a sampling point whose power is greater than delta is determined as the first target data. In the second manner, a preset quantity of sampling points with highest power are reserved, and the preset quantity of sampling points are determined as the first target data. The preset quantity may be K.

As shown in FIG. 9, a higher amplitude indicates higher power, and the preset quantity of sampling points with the highest power are reserved. In other words, a sampling point of a strong transmission path is reserved.

In both the two implementations, the terminal device may determine a one-dimensional interval in which the sampling point is located, that is, a region of interest (region of interest, ROI). The terminal device may reserve a first sampling location t_1 and a last sampling location t_2 of the sampling point in the region, and determine that a region in which the first target data is located is [t_1, t_2]. The terminal device may determine the first sampling location t_1 and the last sampling location t_2 as the first location data, to save information bits for transmission

It should be noted that if the second dataset is a frequency domain dataset, the terminal device may determine, as the first location data, a minimum sampling location and a maximum sampling location in the region in which the first target data is located. If the second dataset is a space domain dataset, the terminal device may determine, as the first location data, a minimum sampling location in a horizontal direction and a maximum sampling location in a vertical direction in the region in which the first target data is located.

In an electromagnetic imaging scenario, the first target data is mostly data corresponding to a target object, and the first location data may be boundary information of a region in which the target object is located.

For example, in the example shown in FIG. 4, the first target data is the data corresponding to the target object. The terminal device may determine a two-dimensional region based on an aggregation feature of the first target data. The two-dimensional region includes the first target data, and the two-dimensional region may be a rectangle or a square. This is not limited in this embodiment of this application. The terminal device may determine a sampling location in an upper left corner and a sampling location in a lower right corner of the two-dimensional region as the first location data.

Optionally, the boundary information of the region may include boundary information of a plurality of regions. When the first target data includes a plurality of regions, the terminal device may separately determine boundary information of the plurality of regions according to the foregoing method, and then determine the boundary information of the plurality of regions as the first location data.

According to the data transmission method provided in this embodiment of this application, the boundary information of the region in which the first target region is located is determined as the first location data, and the location information of the first target region in the second dataset is represented by using a small quantity of information bits, so that a data transmission amount can be reduced, and a transmission resource can be saved.

In an optional embodiment, the first signal further carries a target value of the second dataset, and the target value includes at least one of total power, total energy, average power, average energy, a power variance, or an energy variance.

The second dataset may include sampled data of one or more beams. When the second dataset includes sampled data of one beam, the terminal device calculates a target value of all sampled data of the beam, that is, at least one of the total power, the total energy, the average power, the average energy, the power variance, or the energy variance. When the second dataset includes sampled data of a plurality of beams, the terminal device may calculate a target value of all sampled data of each beam in the plurality of beams, that is, at least one of the total power, the total energy, the average power, the average energy, the power variance, or the energy variance.

For example, the second dataset is represented by a matrix of 256 rows and 1036 columns, and the terminal device needs to calculate at least one of total power, total energy, average power, average energy, power variances, or energy variances of 1036 pieces of data in each row, to obtain 256 target values in total.

Data whose priority is lower than a first preset threshold is discarded in the second dataset, causing a loss of some data. Consequently, reliability of the first target data may be reduced. The terminal device calculates the target value of the second dataset and performs transmission of the target value by using the first signal, so that the reliability of the first target data can be improved.

According to the data transmission method provided in this embodiment of this application, reliability of the first target data and first location information is improved by using the target value, so that a good environment reconstruction effect can be achieved at a receive end while the second dataset is limitedly compressed.

The foregoing describes in detail data carried in the first signal, and the following describes in detail data transmission. Before S202 in which the terminal device sends the first signal, the method 200 may further include: A network device sends first resource indication information, where the first resource indication information indicates a first time-frequency resource, and correspondingly, the terminal device receives the first resource indication information. S202 in which the terminal device sends the first signal includes: The terminal device may send the first signal on the first time-frequency resource, and correspondingly, the network device receives the first signal on the first time-frequency resource.

The first time-frequency resource is used to carry the first signal, and the terminal device may send the first signal on the first time-frequency resource.

An amount of data carried on the first time-frequency resource may be less than a sum of a data amount of second target data (including the first target data) and a data amount of second location data (including the first location data), may be equal to a sum of a data amount of the first target data and a data amount of the first location data, or may be greater than a sum of a data amount of the first target data and a data amount of the first location data. This is not limited in this embodiment of this application.

Optionally, when the first target data and the first location information that are carried in the first signal are compressed, the terminal device may further perform transmission of a compression manner and a parameter used for the compression together. If a plurality of compression manners are the same, transmission of a same compression manner and a same parameter used for the compression may be performed only once.

In a possible implementation, the amount of data carried on the first time-frequency resource is equal to the sum of the data amount of the first target data and the data amount of the first location data, and the terminal device sends the first signal on the first time-frequency resource, where the first signal includes the first target data and the first location data.

In another possible implementation, the amount of data carried on the first time-frequency resource is less than the sum of the data amount of the second target data and the data amount of the second location data. The second target data is all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

When the amount of data carried on the first time-frequency resource is less than the sum of the data amount of the second target data and the data amount of the second location data, the first time-frequency resource cannot carry all the second target data and the second location data, but may carry some target data and some location data. The terminal device may determine the first target data and the first location data based on the priority order and the first time-frequency resource. In other words, the terminal device may first send data of a high priority level, and a data amount of the data is equal to the amount of data carried on the first time-frequency resource. A priority of the first target data in the second target data is high, and the sum of the data amount of the first target data and the data amount of the first location data is less than or equal to the amount of data carried on the first time-frequency resource.

It should be noted that, in some scenarios, the sum of the data amount of the first target data and the data amount of the first location data is less than the amount of data carried on the first time-frequency resource, but it may be insufficient to carry data of another priority. In this case, zeros may be added to the first target data and the first location data, so that the sum of the data amount of the first target data and the data amount of the first location data is equal to the amount of data carried on the first time-frequency resource.

If the first target data includes data of a plurality of priorities, the second target data may be data of a higher priority in the first target data. If the first target data and the first location data include one priority, the second target data may be some data of the priority.

For example, in the example shown in FIG. 3, if the second target data includes the data of the first priority and the data of the second priority, the first target data may be the data of the first priority. If the second target data includes the data of the first priority, the first target data is some data of the first priority.

According to the data transmission method provided in this embodiment of this application, data for transmission is determined based on the data amount of the first time-frequency resource, to improve data transmission flexibility. The terminal device performs transmission of the first target data and the first location data, and the terminal device or the network device may determine whether transmission further needs to be continued. This is not limited in this embodiment of this application.

Optionally, in addition to performing transmission of the first target data and the first location data, the terminal device may determine whether to continue to perform data transmission.

After the terminal device sends the first signal on the first time-frequency resource, the method may further include: The terminal device sends first indication information, where the first indication information indicates that the data transmission is not completed, and correspondingly, the network device receives the first indication information. Alternatively, the terminal device sends second indication information, where the second indication information indicates that the data transmission is completed, and correspondingly, the network device receives the second indication information.

The terminal device may determine whether transmission of target data other than the first target data in the first target data and location data other than the first location data in the second location data needs to be continued. If the first target data and the first location information do not meet a compression precision requirement, the terminal device may determine to continue to perform data transmission, and send the first indication information to the network device, where the first indication information indicates that the data transmission is not completed. If the second target data and the second location information already meet the compression precision requirement, the terminal device may determine not to continue to perform data transmission, and send the second indication information to the network device, where the second indication information indicates that the data transmission is completed.

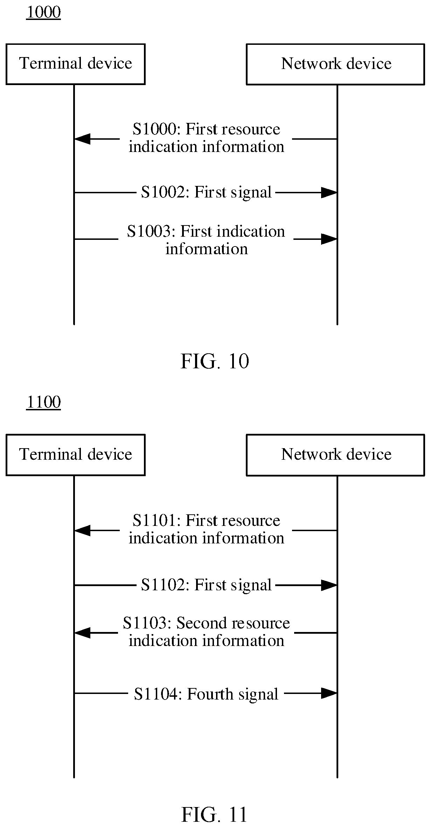

For example, FIG. 10 is a schematic flowchart of a data transmission method 1000. As shown in FIG. 10, the method 1000 may include the following steps.

S 1001: A network device sends first resource indication information to a terminal device, and correspondingly, the terminal device receives the first resource indication information, where the first resource indication information indicates a first time-frequency resource, and an amount of data carried on the first time-frequency resource is less than a sum of a data amount of second target data and a data amount of second location data.

S 1002: The terminal device sends a first signal to the network device on the first time-frequency resource, where the first signal carries first target data and first location data, and correspondingly, the network device receives the first signal on the first time-frequency resource.

S1003: The terminal device sends first indication information to the network device, where the first indication information indicates that data transmission is not completed, and correspondingly, the network device receives the first indication information.

According to the data transmission method provided in this embodiment of this application, when the amount of data carried on the first time-frequency resource is less than the sum of the data amount of the second target data and the data amount of the second location data, transmission of some target data and some location data may be performed on the first time-frequency resource, and the terminal device may autonomously determine whether to continue to perform data transmission, to improve initiative of the terminal device.

Optionally, if the terminal device sends the first indication information, after receiving the first indication information, the network device may send a time-frequency resource again, and the terminal device may perform transmission of remaining data by using the time-frequency resource. A specific data transmission amount may be determined by an amount of data carried on the time-frequency resource. If the transmission is still not completed, the terminal device may further continue to send the first indication information, and continue to perform data transmission by using the time-frequency resource sent by the network device, until a requirement is met or transmission of the first target data and the first location data is completed.

Optionally, the terminal device performs transmission of the first target data and the first location data, and the network device may determine whether to continue to perform data transmission.

After the terminal device sends the first signal on the first time-frequency resource, the method may further include: The network device sends a time-frequency resource to the terminal device; and correspondingly, the terminal device receives the time-frequency resource, and sends remaining data on the time-frequency resource. A specific data transmission amount may be determined by an amount of data carried on the time-frequency resource. If the transmission is still not completed, the network device may further continue to send the time-frequency resource, and the terminal device may continue to perform data transmission by using the time-frequency resource sent by the network device, until the requirement is met or transmission of the second target data and the second location data is completed.

According to the data transmission method provided in this embodiment of this application, when the amount of data carried on the first time-frequency resource is less than the sum of the data amount of the second target data and the data amount of the second location data, transmission of some target data and some location data may be performed on the first time-frequency resource, and the network device determines whether to continue to perform data transmission, so that a requirement on the terminal device can be reduced.

In still another possible implementation, when the amount of data carried on the first time-frequency resource is greater than the sum of the data amount of the first target data and the data amount of the first location data, the method may further include: The terminal device sends a third signal on the first time-frequency resource. The third signal carries third target data and third location data, the third target data includes data that is in the second dataset and whose priority is less than the first preset threshold and is greater than or equal to a second preset threshold, the third locatio n data includes location information of the third target data in the second dataset, and the second preset threshold is less than the first preset threshold.

When the amount of data carried on the first time-frequency resource is greater than the sum of the data amount of the first target data and the data amount of the first location data, in addition to the first target data and the first location information, the first time-frequency resource may further carry additional data. In this case, the terminal device may perform transmission of data whose priority is lower than the first preset threshold. The second preset threshold may be determined based on the amount of data carried on the first time-frequency resource. The third target data is data whose priority is lower than the first preset threshold but is greater than or equal to the second preset threshold, and the third location data includes the location information of the third target data in the second dataset. A sum of a data amount of the third target data, a data amount of the third location data, the data amount of the first target data, and the data amount of the first location data is less than or equal to the amount of data carried on the first time-frequency resource.

For example, in the example shown in FIG. 3, the first target data may be the data of the first priority, the first location information is the location information of the first target data in the second dataset, the third target data may be the data of the second priority, and the third location information is the location information of the third target data in the second dataset. If the amount of data carried on the first time-frequency resource is greater than the sum of the data amount of the first target data and the data amount of the first location data, in addition to performing transmission of the first target data and the first location data, the terminal device may further perform transmission of the third target data and the third location data on the first time-frequency resource.

According to the data transmission method provided in this embodiment of this application, when the amount of data carried on the first time-frequency resource is greater than the sum of the data amount of the first target data and the data amount of the first location data, in addition to the transmission of the first target data and the first location data, the transmission of the third target data and the third location data may be further performed. In other words, transmission of more data may be performed. The data is used for environment construction, so that accuracy of the environment construction can be further improved.

In an optional embodiment, after the terminal device sends the first signal on the first time-frequency resource, the method may further include: The network device sends second resource indication information to the terminal device, and correspondingly, the terminal device receives the second resource indication information. The second resource indication information indicates a second time-frequency resource. The terminal device sends a fourth signal on the second time-frequency resource, and correspondingly, the network device obtains the fourth signal on the second time-frequency resource. The fourth signal carries fourth target data and fourth location data, the fourth target data is data that is in the second dataset and whose priority is less than the first preset threshold and is greater than or equal to the second preset threshold, the fourth location data is location information of the fourth target data in the second dataset, and the second preset threshold is less than the first preset threshold.

After the terminal device sends the first signal on the first time-frequency resource, the network device may further obtain data of another priority, and the network device sends the second resource indication information to the terminal device. The second resource indication information indicates a second time-frequency resource, and the second time-frequency resource may be used to perform transmission of the data whose priority is lower than the first preset threshold. The fourth target data is data that is in the second dataset and whose priority is less than the first preset threshold but is greater than or equal to the second preset threshold. An amount of data carried on the second time-frequency resource may include a sum of a data amount of the fourth target data and a data amount of the fourth location data.

For example, FIG. 11 is a schematic flowchart of a data transmission method 1100. As shown in FIG. 11, the method 1100 may include the following steps.

S1101: A network device sends first resource indication information to a terminal device, and correspondingly, the terminal device receives the first resource indication information. The first resource indication information indicates a first time-frequency resource, an amount of data carried on the first time-frequency resource is less than a sum of a data amount of second target data and a data amount of second location data. The second target data is all data that is in a second dataset and whose priority is greater than or equal to a first preset threshold, the second location data includes location information of the second target data in the second dataset, first target data and first location data are determined based on a priority order and the first time-frequency resource, the second target data includes the first target data, and the second location data includes the first location data.

S 1102: The terminal device sends a first signal to the network device on the first time-frequency resource, where the first signal carries the first target data and the first location data, and correspondingly, the network device receives the first signal on the first time-frequency resource.

S 1103: The network device sends second resource indication information to the terminal device, and correspondingly, the terminal device receives the second resource indication information.

S1104: The terminal device sends a fourth signal on a second time-frequency resource, and correspondingly, the network device obtains the fourth signal on the second time-frequency resource.

According to the data transmission method provided in this embodiment of this application, in addition to transmission of the first target data and the first location data, transmission of fourth target data and fourth location data may be further performed. In other words, transmission of more data may be performed. The data is used for environment construction, so that accuracy of the environment construction can be further improved.

In an optional embodiment, the method further includes: The network device sends information about a preset parameter to the terminal device, and correspondingly, the terminal device receives the information about the preset parameter, and the terminal device sends an amount of data of each priority in the second dataset to the network device. The preset parameter is determined by the network device. The network device may send the information about the preset parameter to the terminal device. When requesting a time-frequency resource, the terminal device may send a request message to the network device. The request message may include the amount of data of each priority in the second dataset.

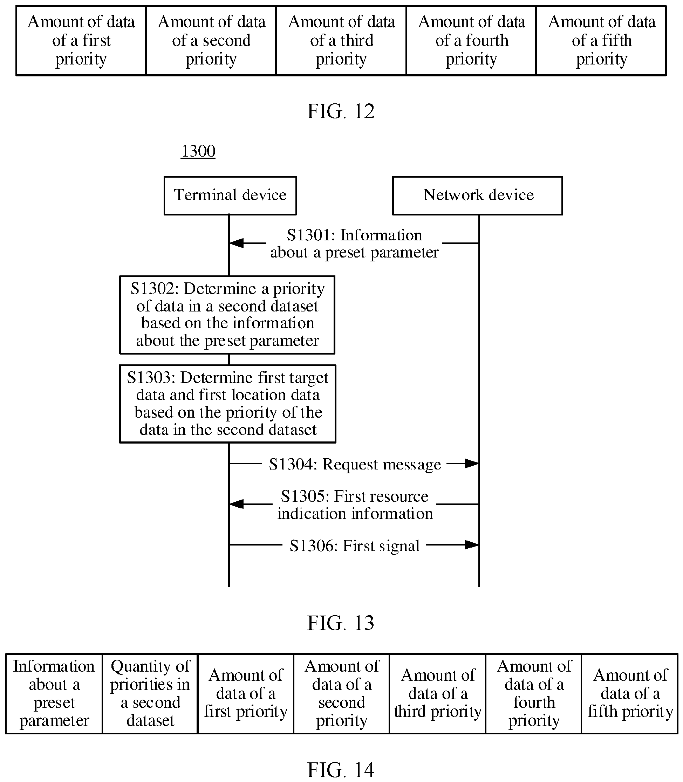

For example, FIG. 12 is a block diagram of a request message. The second dataset includes data of five priorities: data of a first priority, data of a second priority, data of a third priority, data of a fourth priority, and data of a fifth priority. The request message may include an amount of the data of the first priority, an amount of the data of the second priority, an amount of the data of the third priority, an amount of the data of the fourth priority, and an amount of the data of the fifth priority.

For example, FIG. 13 is a schematic flowchart of a data transmission method 1300. As shown in FIG. 13, the method 1300 may include the following steps.

S 1301: A network device sends information about a preset parameter to a terminal device, and correspondingly, the terminal device receives the information about the preset parameter.

S1302: The terminal device determines a priority of data in a second dataset based on the information about the preset parameter.

S1303: The terminal device determines first target data and first location data based on the priority of the data in the second dataset.

S1304: The terminal device sends a first request message to the network device, where the first request message may include an amount of data of each priority in the second dataset, and correspondingly, the network device receives the first request message, where the first request message is used to request a time-frequency resource.

S1305: The network device sends first resource indication information to the terminal device based on the first request message, and correspondingly, the terminal device receives the first resource indication information, where the first resource indication information indicates a first time-frequency resource.

S1306: The terminal device receives the first resource indication information, and sends the first signal on the first time-frequency resource.

According to the data transmission method provided in this embodiment of this application, the preset parameter is determined by the network device. The terminal device sends the first request message to request a time-frequency resource, where the request message may include the amount of data of each priority in the second dataset, so that a requirement on the terminal device can be reduced, and a quantity of bits used by the request message is small, to help save a bit resource.

In an optional embodiment, the method further includes: The terminal device sends the information about the preset parameter, a quantity of priorities in the second dataset, and the amount of data of each priority in the second dataset. The preset parameter is determined by the terminal device. When requesting a time-frequency resource, the terminal device may send a request message to the network device. The request message may include the information about the preset parameter, the quantity of priorities in the second dataset, and the amount of data of each priority in the second dataset.

For example, FIG. 14 is a block diagram of a request message. The second dataset includes data of five priorities: data of a first priority, data of a second priority, data of a third priority, data of a fourth priority, and data of a fifth priority. The request message may include the information about the preset parameter, the quantity of priorities in the second dataset, an amount of the data of the first priority, an amount of the data of the second priority, an amount of the data of the third priority, an amount of the data of the fourth priority, and an amount of the data of the fifth priority.

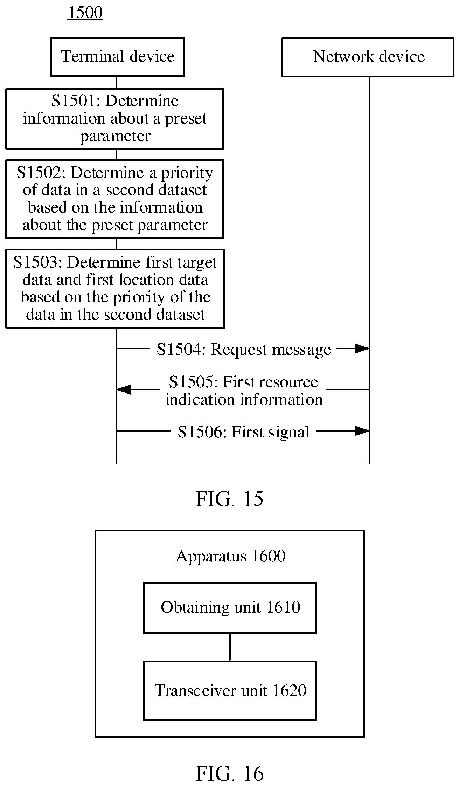

For example, FIG. 15 is a schematic flowchart of a data transmission method 1500. As shown in FIG. 15, the method 1500 may include the following steps.

S1501: A terminal device determines information about a preset parameter.

S1502: The terminal device determines a priority of data in a second dataset based on the information about the preset parameter.

S1503: The terminal device determines first target data and first location data based on the priority of the data in the second dataset.

S1504: The terminal device sends a second request message to a network device, where the second request message may include the information about the preset parameter, a quantity of priorities in the second dataset, and an amount of data of each priority in the second dataset, and correspondingly, the network device receives the second request message, where the second request message is used to request a time-frequency resource.

S1505: The network device sends first resource indication information to the terminal device based on the second request message, and correspondingly, the terminal device receives the first resource indication information, where the first resource indication information indicates the first time-frequency resource.

S1506: The terminal device receives the first resource indication information, and sends the first signal on the first time-frequency resource.

According to the data transmission method provided in this embodiment of this application, the preset parameter is determined by the terminal device. The terminal device sends a second request message to request a time-frequency resource. The second request message may include the information about the preset parameter, the quantity of priorities in the second dataset, and the amount of data of each priority in the second dataset, so that the network device decompresses the data. In addition, the terminal device may autonomously determine the preset parameter. This improves initiative of the terminal device, and can be more flexibly to adapt to more application scenarios. The data transmission method according to embodiments of this application is described above in detail with reference to FIG. 1 to FIG. 15. A data transmission apparatus according to embodiments of this application is described below in detail with reference to FIG. 16 to FIG. 18.

FIG. 16 shows a data transmission apparatus 1600 according to an embodiment of this application. The apparatus 1600 includes an obtaining unit 1610 and a transceiver unit 1620. The obtaining unit 1610 is configured to obtain a first dataset. The first dataset includes sampled data of a beam signal from a sensed object. The transceiver unit 1620 is configured to send a first signal. The first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset.

Optionally, the priority is determined based on a preset parameter.

Optionally, the preset parameter is one of a power threshold, an energy threshold, a quantity threshold, or a data type. Optionally, the first signal carries the first target data and compressed first location data, and the compressed first location data is obtained by compressing the first location data based on a tree data structure.

Optionally, the tree data structure includes a quad tree and/or a combination of quad tree and binary tree. Optionally, the first location data includes boundary information of a region in which the first target data is located in the second dataset.

Optionally, the boundary information of the region in which the first target data is located includes boundary information of a plurality of regions.

Optionally, the first signal further carries a target value of the second dataset, and the target value includes at least one of total power, total energy, average power, average energy, a power variance, or an energy variance.

Optionally, the transceiver unit 1620 is further configured to: receive first resource indication information, where the first resource indication information indicates a first time-frequency resource; and send the first signal on the first time-frequency resource.

Optionally, an amount of data carried on the first time-frequency resource is less than a sum of a data amount of second target data and a data amount of second location data. The second target data is all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

Optionally, the transceiver unit 1620 is further configured to: send first indication information, where the first indication information indicates that data transmission is not completed; or send second indication information, where the second indication information indicates that data transmission is completed.

Optionally, the amount of data carried on the first time-frequency resource is greater than a sum of a data amount of the first target data and a data amount of the first location data. The transceiver unit 1620 is further configured to send a third signal on the first time-frequency resource. The third signal carries third target data and third location data, the third target data includes data that is in the second dataset and whose priority is greater than or equal to a second preset threshold, the third location data includes location information of the third target data in the second dataset, and the second preset threshold is less than the first preset threshold.

Optionally, the transceiver unit 1620 is further configured to: receive second resource indication information, where the second resource indication information indicates a second time-frequency resource; and send a fourth signal on the second time-frequency resource, where the fourth signal carries fourth target data and fourth location data, the fourth target data is data that is in the second dataset and whose priority is greater than or equal to the second preset threshold, the fourth location data is location information of the fourth target data in the second dataset, and the second preset threshold is less than the first preset threshold.

Optionally, the transceiver unit 1620 is further configured to: receive information about the preset parameter; and send an amount of data of each priority in the second dataset.

Optionally, the transceiver unit 1620 is further configured to send the information about the preset parameter, a quantity of priorities in the second dataset, and the amount of data of each priority in the second dataset.

Optionally, the beam signal of the sensed object is reflected by the sensed object.

It should be understood that the apparatus 1600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1600 may be specifically the terminal device in the foregoing embodiments, and the apparatus 1600 may be configured to perform procedures and/or steps corresponding to the terminal device in the foregoing method embodiments. To avoid repetition, details are not described herein again.

The apparatus 1600 in the foregoing solutions has a function of implementing a corresponding step performed by the terminal device in the foregoing method. The function may be implemented by hardware, or may be implemented by hardware by executing corresponding software. The hardware or the software includes one or more modules corresponding to the function. For example, the transceiver unit 1620 may include a sending unit and a receiving unit. The sending unit may be configured to implement steps and/or procedures that correspond to the transceiver unit and that are used to perform a sending action. The receiving unit may be configured to implement steps and/or procedures that correspond to the transceiver unit and that are used to perform a receiving action. The sending unit may be replaced by a transmitter, and the receiving unit may be replaced by a receiver, to respectively perform sending and receiving operations and related processing operations in the method embodiments.

In embodiments of this application, the apparatus 1600 in FIG. 16 may alternatively be a chip or a chip system, for example, a system on chip (system on chip, SoC). Correspondingly, the transceiver unit 1620 may be a transceiver circuit of the chip. This is not limited herein.

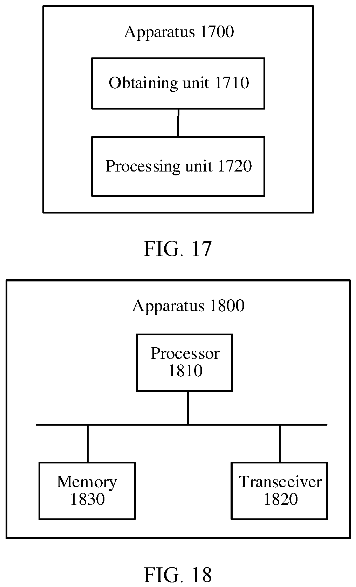

FIG. 17 is a block diagram of a data transmission apparatus 1700 according to an embodiment of this application. The apparatus 1700 includes an obtaining unit 1710 and a processing unit 1720. The obtaining unit 1710 is configured to obtain a first signal. The first signal carries first target data and first location data. The processing unit 1720 is configured to reconstruct a first dataset based on the first target data and the first location data. The first target data includes data that is in a second dataset and whose priority is greater than or equal to a first preset threshold, the first location data includes location information of the first target data in the second dataset, the second dataset is the first dataset or a dataset converted from the first dataset, and the first dataset includes sampled data of a beam signal from a sensed object.

Optionally, the priority is determined based on a preset parameter.

Optionally, the preset parameter is one of a power threshold, an energy threshold, a quantity threshold, or a data type. Optionally, the first signal carries the first target data and compressed first location data, and the compressed first location data is obtained by compressing the first location data based on a tree data structure.

Optionally, the tree data structure includes a quad tree and/or a combination of quad tree and binary tree.

Optionally, the first location data includes boundary information of a region in which the first target data is located in the second dataset.

Optionally, the boundary information of the region in which the first target data is located includes boundary information of a plurality of regions.

Optionally, the first signal further carries a target value of the second dataset, and the target value includes at least one of total power, total energy, average power, average energy, a power variance, or an energy variance.

Optionally, the apparatus 1700 further includes a transceiver unit. The transceiver unit is further configured to send first resource indication information. The first resource indication information indicates a first time-frequency resource. The obtaining unit 1710 is further configured to obtain the first signal on the first time-frequency resource.

Optionally, an amount of data carried on the first time-frequency resource is less than a sum of a data amount of second target data and a data amount of second location data. The second target data is all data that is in the second dataset and whose priority is greater than or equal to the first preset threshold, the second location data includes location information of the second target data in the second dataset, the first target data and the first location data are determined based on a priority order and the first time-frequency resource, the second target data includes the first target data, and the second location data includes the first location data.

Optionally, the transceiver unit is further configured to: receive first indication information, where the first indication information indicates that data transmission is not completed; or receive second indication information, where the second indication information indicates that data transmission is completed.

Optionally, the amount of data carried on the first time-frequency resource is greater than a sum of a data amount of the first target data and a data amount of the first location data. The transceiver unit is further configured to receive a third signal on the first time-frequency resource. The third signal carries third target data and third location data, the third target data includes data that is in the second dataset and whose priority is less than the first preset threshold and is greater than or equal to a second preset threshold, the third location data includes location information of the third target data in the second dataset, and the second preset threshold is less than the first preset threshold.

Optionally, the transceiver unit is further configured to: send second resource indication information, where the second resource indication information indicates a second time-frequency resource; and receive a fourth signal on the second resource indication information, where the fourth signal carries fourth target data and fourth location data, the fourth target data is the data that is in the second dataset and whose priority is less than the first preset threshold and is greater than or equal to the second preset threshold, the fourth location data is location information of the fourth target data in the second dataset, and the second preset threshold is less than the first preset threshold.

Optionally, the transceiver unit is further configured to: send information about the preset parameter; and receive an amount of data of each priority in the second dataset.

Optionally, the transceiver unit is further configured to receive the information about the preset parameter, a quantity of priorities in the second dataset, and the amount of data of each priority in the second dataset.

Optionally, the beam signal of the sensed object is reflected by the sensed object.

It should be understood that the apparatus 1700 herein is embodied in the form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1700 may be specifically the network device in the foregoing embodiments, and the apparatus 1700 may be configured to perform procedures and/or steps corresponding to the network device in the foregoing method embodiments. To avoid repetition, details are not described herein again.

The apparatus 1700 in the foregoing solutions has a function of implementing a corresponding step performed by the network device in the foregoing method. The function may be implemented by hardware, or may be implemented by hardware by executing corresponding software. The hardware or the software includes one or more modules corresponding to the function. For example, the transceiver unit may include a sending unit and a receiving unit. The sending unit may be configured to implement steps and/or procedures that correspond to the transceiver unit and that are used to perform a sending action. The receiving unit may be configured to implement steps and/or procedures that correspond to the transceiver unit and that are used to perform a receiving action. The sending unit may be replaced by a transmitter, and the receiving unit may be replaced by a receiver, to respectively perform sending and receiving operations and related processing operations in the method embodiments.

In embodiments of this application, the apparatus 1700 in FIG. 17 may alternatively be a chip or a chip system, for example, a system on chip (system on chip, SoC). Correspondingly, the transceiver unit may be a transceiver circuit of the chip. This is not limited herein.

FIG. 18 is a block diagram of another data transmission apparatus 1800 according to an embodiment of this application. The apparatus 1800 includes a processor 1810, a transceiver 1820, and a memory 1830. The processor 1810, the transceiver 1820, and the memory 1830 communicate with each other through an internal connection path. The memory 1830 is configured to store instructions. The processor 1810 is configured to execute the instructions stored in the memory 1830, to control the transceiver 1820 to send a signal and/or receive a signal.

In a possible implementation, the apparatus 1800 is configured to perform procedures and steps corresponding to the terminal device in the foregoing method 200.

The processor 1810 is configured to obtain a first dataset. The first dataset includes sampled data of a beam signal from a sensed object. The transceiver 1820 is configured to send a first signal. The first signal carries first target data and first location data, the first target data includes data that is in a second dataset and whose priority is greater than or equal to a first preset threshold, the first location data includes location information of the first target data in the second dataset, and the second dataset is the first dataset or a dataset converted from the first dataset.

In another possible implementation, the apparatus 1800 is configured to perform procedures and steps corresponding to the network device in the foregoing method 200.

The transceiver 1820 is configured to obtain the first signal. The first signal carries the first target data and the first location data. The processor 1810 is configured to reconstruct a first dataset based on the first target data and the first location data. The first target data includes the data that is in the second dataset and whose priority is greater than or equal to the first preset threshold, the first location data includes the location information of the first target data in the second dataset, the second dataset is the first dataset or the dataset converted from the first dataset, and the first dataset includes the sampled data of the beam signal from the sensed object.

It should be understood that the apparatus 1800 may be specifically the terminal device or the network device in the foregoing embodiments, and may be configured to perform steps and/or procedures corresponding to the terminal device or the network device in the foregoing method embodiments. Optionally, the memory 1830 may include a read-only memory and a random access memory, and provide instructions and data to the processor. A part of the memory may further include a non-volatile random access memory. For example, the memory may further store information of a device type. The processor 1810 may be configured to execute the instructions stored in the memory, and when the processor 1810 executes the instructions stored in the memory, the processor 1810 is configured to perform steps and/or procedures in the method embodiments corresponding to the terminal device or the network device. The transceiver 1820 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. The software unit may be located in a mature storage medium in the art, such as a random access memory, a flash memory, a read-only memory, a programmable read-only memory, an electrically erasable programmable memory, a register, or the like. The storage medium is located in the memory, and the processor reads instructions in the memory and completes the steps in the foregoing methods in combination with hardware of the processor. To avoid repetition, details are not described herein again.

An embodiment of this application further provides a communication apparatus on a terminal side, including a communication interface and a logic circuit. The logic circuit is configured to obtain a first dataset, and the communication interface is configured to send a first signal and the method in the foregoing embodiment.

An embodiment of this application further provides a communication apparatus on a network side, including a communication interface and a logic circuit. The communication interface is configured to obtain a first signal, and the logic circuit is configured to reconstruct a first dataset and the method in the foregoing embodiment.

An embodiment of this application further provides a communication system. The communication system may include the terminal device (the apparatus 1600 is represented as a terminal device) shown in FIG. 16 and the network device (the apparatus 17 is represented as a network device) shown in FIG. 17.

An embodiment of this application provides a readable computer storage medium. The readable computer storage medium is configured to store a computer program, and the computer program is used to implement the method corresponding to the terminal device shown in the possible implementations in the foregoing embodiments.

An embodiment of this application provides another readable computer storage medium. The readable computer storage medium is configured to store a computer program, and the computer program is used to implement the method corresponding to the network device shown in the possible implementations in the foregoing embodiments.

An embodiment of this application provides a computer program product. The computer program product includes a computer program (which may also be referred to as code or an instruction). When the computer program is run on a computer, the computer may perform the method corresponding to the terminal device shown in the foregoing embodiments.

An embodiment of this application provides another computer program product. The computer program product includes a computer program (which may also be referred to as code or an instruction). When the computer program is run on a computer, the computer may perform the method corresponding to the network device shown in the possible implementations in the foregoing embodiments.

An embodiment of this application provides a chip system. The chip system is configured to support the foregoing terminal device in implementing the functions shown in embodiments of this application.

An embodiment of this application provides another chip system. The chip system is configured to support the foregoing network device in implementing the functions shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to a conventional technology, or some of the technical solutions may be represented in a form of a software product. The computer software product is stored in a storage medium and includes several instructions for instructing a computer device (which may be a personal computer, a server, a receive end, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

    obtaining, by a first data transmission apparatus, a first dataset, wherein the first dataset comprises sampled data of a beam signal from a sensed object; and
    sending, by the first data transmission apparatus, a first signal, wherein the first signal carries first target data and first location data, the first target data comprises data that is in a second dataset and whose priority is greater than or equal to a first preset threshold, the first location data comprises location information of the first target data in the second dataset, and the second dataset is the first dataset or a dataset converted from the first dataset.

2. The method according to claim 1, wherein the priority is determined based on a preset parameter.

3. The method according to claim 2, wherein the preset parameter is one of a power threshold, an energy threshold, a quantity threshold, or a data type.

4. The method according to any one of claims 1 to 3, wherein the first signal carries the first target data and compressed first location data, and the compressed first location data is obtained by compressing the first location data based on a tree data structure.

5. The method according to claim 4, wherein the tree data structure comprises a quad tree and/or a combination of quad tree and binary tree.

**6.** The method according to any one of claims 1 to 3, wherein the first location data comprises boundary information of a region in which the first target data is located in the second dataset.

**7.** The method according to claim 6, wherein the boundary information of the region in which the first target data is located comprises boundary information of a plurality of regions.

**8.** The method according to any one of claims 1 to 7, wherein the first signal further carries a target value of the second dataset, and the target value comprises at least one of total power, total energy, average power, average energy, a power variance, or an energy variance.

**9.** The method according to any one of claims 1 to 8, wherein before the sending, by the first data transmission apparatus, a first signal, the method further comprises:

receiving, by the first data transmission apparatus, first resource indication information, wherein the first resource indication information indicates a first time-frequency resource; and
the sending, by the first data transmission apparatus, a first signal comprises:

sending, by the first data transmission apparatus, the first signal on the first time-frequency resource.

**10.** The method according to claim 9, wherein an amount of data carried on the first time-frequency resource is less than a sum of a data amount of second target data and a data amount of second location data, wherein the second target data comprises all data that is in the second dataset and whose priority is greater than or equal to the first preset threshold, the second location data comprises location information of the second target data in the second dataset, the first target data and the first location data are determined based on a priority order and the first time-frequency resource, the second target data comprises the first target data, and the second location data comprises the first location data.

**11.** The method according to claim 10, wherein the method further comprises:

sending, by the first data transmission apparatus, first indication information, wherein the first indication information indicates that data transmission is not completed; or
sending, by the first data transmission apparatus, second indication information, wherein the second indication information indicates that data transmission is completed.

**12.** The method according to claim 9, wherein an amount of data carried on the first time-frequency resource is greater than a sum of a data amount of the first target data and a data amount of the first location data; and the method further comprises:
sending, by the first data transmission apparatus, a third signal on the first time-frequency resource, wherein the third signal carries third target data and third location data, the third target data comprises data that is in the second dataset and whose priority is less than the first preset threshold and is greater than or equal to a second preset threshold, the third location data comprises location information of the third target data in the second dataset, and the second preset threshold is less than the first preset threshold.

**13.** The method according to claim 9, wherein the method further comprises:

receiving, by the first data transmission apparatus, second resource indication information, wherein the second resource indication information indicates a second time-frequency resource; and
sending, by the first data transmission apparatus, a fourth signal on the second time-frequency resource, wherein the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

**14.** The method according to any one of claims 2 to 13, wherein the method further comprises:

receiving, by the first data transmission apparatus, information about the preset parameter; and
sending, by the first data transmission apparatus, an amount of data of each priority in the second dataset.

**15.** The method according to any one of claims 2 to 13, wherein the method further comprises:
sending, by the first data transmission apparatus, information about the preset parameter, a quantity of priorities in the second dataset, and an amount of data of each priority in the second dataset.

**16.** The method according to any one of claims 1 to 15, wherein the beam signal of the sensed object is reflected by the sensed object.

**17.** A data transmission method, comprising:

obtaining, by a second data transmission apparatus, a first signal, wherein the first signal carries first target data and first location data; and reconstructing, by the second data transmission apparatus, a first dataset based on the first target data and the first location data, wherein the first target data comprises data that is in a second dataset and whose priority is greater than or equal to a first preset threshold, the first location data comprises location information of the first target data in the second dataset, the second dataset is the first dataset or a dataset converted from the first dataset, and the first dataset comprises sampled data of a beam signal from a sensed object.

**18.** The method according to claim 17, wherein the priority is determined based on a preset parameter.

**19.** The method according to claim 18, wherein the preset parameter is one of a power threshold, an energy threshold, a quantity threshold, or a data type.

**20.** The method according to any one of claims 17 to 19, wherein the first signal carries the first target data and compressed first location data, and the compressed first location data is obtained by compressing the first location data based on a tree data structure.

**21.** The method according to claim 20, wherein the tree data structure comprises a quad tree and/or a combination of quad tree and binary tree.

**22.** The method according to any one of claims 17 to 21, wherein the first location data comprises boundary information of a region in which the first target data is located in the second dataset.

**23.** The method according to claim 22, wherein the boundary information of the region in which the first target data is located comprises boundary information of a plurality of regions.

**24.** The method according to any one of claims 17 to 23, wherein the first signal further carries a target value of the second dataset, and the target value comprises at least one of total power, total energy, average power, average energy, a power variance, or an energy variance.

**25.** The method according to any one of claims 17 to 24, wherein before the obtaining, by a second data transmission apparatus, a first signal, the method further comprises:

sending, by the second data transmission apparatus, first resource indication information, wherein the first resource indication information indicates a first time-frequency resource; and the obtaining, by a second data transmission apparatus, a first signal comprises:

obtaining, by the second data transmission apparatus, the first signal on the first time-frequency resource.

**26.** The method according to claim 25, wherein an amount of data carried on the first time-frequency resource is less than a sum of a data amount of second target data and a data amount of second location data, wherein the second target data comprises all data that is in the second dataset and whose priority is greater than or equal to the first preset threshold, the second location data comprises location information of the second target data in the second dataset, the first target data and the first location data are determined based on a priority order and the first time-frequency resource, the second target data comprises the first target data, and the second location data comprises the first location data.

**27.** The method according to claim 26, wherein the method further comprises:

receiving, by the second data transmission apparatus, first indication information, wherein the first indication information indicates that data transmission is not completed; or receiving, by the second data transmission apparatus, second indication information, wherein the second indication information indicates that data transmission is completed.

**28.** The method according to claim 25, wherein an amount of data carried on the first time-frequency resource is greater than a sum of a data amount of the first target data and a data amount of the first location data; and the method further comprises: receiving, by the second data transmission apparatus, a third signal on the first time-frequency resource, wherein the third signal carries third target data and third location data, the third target data comprises data that is in the second dataset and whose priority is less than the first preset threshold and is greater than or equal to a second preset threshold, the third location data comprises location information of the third target data in the second dataset, and the second preset threshold is less than the first preset threshold.

**29.** The method according to claim 25, wherein the method further comprises:

sending, by the second data transmission apparatus, second resource indication information, wherein the second resource indication information indicates a second time-frequency resource; and

receiving, by the second data transmission apparatus, a fourth signal on the second resource indication information, wherein the fourth signal carries fourth target data and fourth location data, the fourth target data is data that is in the second dataset and whose priority is less than the first preset threshold and is greater than or equal to a second preset threshold, the fourth location data is location information of the fourth target data in the second dataset, and the second preset threshold is less than the first preset threshold.

30. The method according to any one of claims 18 to 29, wherein the method further comprises:

sending, by the second data transmission apparatus, information about the preset parameter; and

receiving, by the second data transmission apparatus, an amount of data of each priority in the second dataset.

31. The method according to any one of claims 18 to 29, wherein the method further comprises:
receiving, by the second data transmission apparatus, information about the preset parameter, a quantity of priorities in the second dataset, and an amount of data of each priority in the second dataset.

32. The method according to any one of claims 17 to 31, wherein the beam signal of the sensed object is reflected by the sensed object.

33. A data transmission apparatus, comprising an obtaining unit and a transceiver unit, wherein the obtaining unit is configured to obtain a first dataset, and the transceiver unit is configured to send a first signal, to enable the data transmission apparatus to perform the method according to any one of claims 1 to 16.

34. A data transmission apparatus, comprising an obtaining unit and a processing unit, wherein the obtaining unit is configured to obtain a first signal, and the processing unit is configured to reconstruct a first dataset, to enable the data transmission apparatus to perform the method according to any one of claims 17 to 32.

35. A communication device, comprising a processor and a memory, wherein the memory is configured to store code instructions, and the processor is configured to run the code instructions, to perform the method according to any one of claims 1 to 16 or perform the method according to any one of claims 17 to 32.

36. A communication system, comprising a terminal device and a network device, wherein the terminal device is configured to perform the method according to any one of claims 1 to 16, and the network device is configured to perform the method according to any one of claims 17 to 32.

37. A communication apparatus, comprising a communication interface and a logic circuit, wherein the logic circuit is configured to obtain a first dataset, and the communication interface is configured to send a first signal, to enable the communication apparatus to perform the method according to any one of claims 1 to 16.

38. A communication apparatus, comprising a communication interface and a logic circuit, wherein the communication interface is configured to obtain a first signal, and the logic circuit is configured to reconstruct a first dataset, to enable the communication apparatus to perform the method according to any one of claims 17 to 32.

39. A computer-readable storage medium, wherein the computer-readable storage medium stores a computer program, and when the computer program is run on a computer, the method according to any one of claims 1 to 16 or the method according to any one of claims 17 to 32 is performed.

40. A computer program product, wherein the computer program product comprises instructions, and when the instructions are executed, the method according to any one of claims 1 to 16 or the method according to any one of claims 17 to 32 is performed.

100

Obstacle

101

101

FIG. 1

200

| Terminal device | Network device |

S201: Obtain a first dataset

S202: First signal

S203: Reconstruct the first dataset based on first target data and first location data

FIG. 2

FIG. 3

First target data

FIG. 4

FIG. 5

FIG. 6

FIG. 7

FIG. 8

FIG. 9

1000

```
┌─────────────────┐                    ┌─────────────────┐
│ Terminal device │                    │  Network device │
└─────────────────┘                    └─────────────────┘
         │                                      │
         │         S1000: First resource        │
         │◄──────  indication information  ──────│
         │                                      │
         │                                      │
         │──────── S1002: First signal ────────►│
         │                                      │
         │         S1003: First indication      │
         │────────       information       ────►│
         │                                      │
         │                                      │
```

FIG. 10

1100

```
┌─────────────────┐                    ┌─────────────────┐
│ Terminal device │                    │  Network device │
└─────────────────┘                    └─────────────────┘
         │                                      │
         │         S1101: First resource        │
         │◄──────  indication information  ──────│
         │                                      │
         │──────── S1102: First signal ────────►│
         │                                      │
         │         S1103: Second resource       │
         │◄──────  indication information  ──────│
         │                                      │
         │──────── S1104: Fourth signal ───────►│
         │                                      │
         │                                      │
```

FIG. 11

| Amount of data of a first priority | Amount of data of a second priority | Amount of data of a third priority | Amount of data of a fourth priority | Amount of data of a fifth priority |
|---|---|---|---|---|

FIG. 12

1300

FIG. 13

| Information about a preset parameter | Quantity of priorities in a second dataset | Amount of data of a first priority | Amount of data of a second priority | Amount of data of a third priority | Amount of data of a fourth priority | Amount of data of a fifth priority |
|---|---|---|---|---|---|---|

FIG. 14

1500

| Terminal device | | Network device |

S1501: Determine information about a preset parameter

S1502: Determine a priority of data in a second dataset based on the information about the preset parameter

S1503: Determine first target data and first location data based on the priority of the data in the second dataset

S1504: Request message →

← S1505: First resource indication information

S1506: First signal →

FIG. 15

Apparatus 1600

Obtaining unit 1610

Transceiver unit 1620

FIG. 16

Apparatus 1700

Obtaining unit 1710

Processing unit 1720

FIG. 17

Apparatus 1800

Processor 1810

Memory 1830

Transceiver 1820

FIG. 18

# EP 4 496 254 A1

<table>
<tr><td colspan="3" align="center">**INTERNATIONAL SEARCH REPORT**</td><td>International application No.<br><br>**PCT/CN2023/082322**</td></tr>
</table>

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP: 感知, 压缩, 反射, 指示, 位置, 空口, 变换, 波束, 采样, 重构, 优先级, 门限, 阈值, sense, compress, reflect, indication, location, interface, transform, beam, sample, reconstruction, priority, threshold

**C. DOCUMENTS CONSIDERED TO BE RELEVANT**

| Category* | Citation of document, with indication, where appropriate, of the relevant passages | Relevant to claim No. |
|---|---|---|
| X | WO 2022028379 A1 (HUAWEI TECHNOLOGIES CO., LTD.) 10 February 2022 (2022-02-10)<br>description, page 5, paragraph 7-page 17, paragraph 4 | 1-40 |
| A | CN 109451430 A (HUAWEI TECHNOLOGIES CO., LTD.) 08 March 2019 (2019-03-08)<br>entire document | 1-40 |
| A | US 2022060288 A1 (QUALCOMM INC.) 24 February 2022 (2022-02-24)<br>entire document | 1-40 |
| A | WO 2021160028 A1 (ZTE CORP.) 19 August 2021 (2021-08-19)<br>entire document | 1-40 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 232020** | **24 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
| --- | --- |
| | **PCT/CN2023/082322** |

| Patent document cited in search report | | | Publication date (day/month/year) | Patent family member(s) | Publication date (day/month/year) |
| --- | --- | --- | --- | --- | --- |
| WO | 2022028379 | A1 | 10 February 2022 | None | |
| CN | 109451430 | A | 08 March 2019 | None | |
| US | 2022060288 | A1 | 24 February 2022 | None | |
| WO | 2021160028 | A1 | 19 August 2021 | None | |

Form PCT/ISA/210 (patent family annex) (July 2022)

**REFERENCES CITED IN THE DESCRIPTION**

**Patent documents cited in the description**

- CN 202210409826